Europäisches Patentamt

(19) European Patent Office

Office européen des brevets

(11) **EP 0 932 106 A1**

(12) **EUROPEAN PATENT APPLICATION**
published in accordance with Art. 158(3) EPC

(43) Date of publication:
28.07.1999 Bulletin 1999/30

(51) Int. Cl.$^6$: **G06F 17/14**, H03M 7/30,
H04N 7/30

(21) Application number: 98924648.3

(22) Date of filing: 16.06.1998

(86) International application number:
PCT/JP98/02653

(87) International publication number:
WO 98/58328 (23.12.1998 Gazette 1998/51)

(84) Designated Contracting States:
DE FR GB NL

(30) Priority: 16.06.1997 JP 15904097
03.09.1997 JP 23867897

(71) Applicant: Sony Corporation
Tokyo 141-0001 (JP)

(72) Inventors:
 • ICHIOKA, Hidetoshi
 Sony Corporation
 Shinagawa-ku Tokyo 141-0001 (JP)

 • ASAZU, Hideki
 Sony Corporation
 Shinagawa-ku Tokyo 141-0001 (JP)

(74) Representative:
 Pilch, Adam John Michael et al
 D. YOUNG & CO.,
 21 New Fetter Lane
 London EC4A 1DA (GB)

(54) **DIGITAL SIGNAL CONVERTING METHOD AND DEVICE, TRANSFORMATION MATRIX GENERATING METHOD AND DEVICE, AND SUPPLY MEDIUM**

(57)     An input orthogonal transform matrix generating section 11 generates an inverse orthogonal transform matrix $Ts_{(k)}^{-1}$ expressing inverse transform of orthogonal transform carried out on an input digital signal 15 of an orthogonally transformed domain, and an output orthogonal transform matrix generating section 12 generates an orthogonal transform matrix $Td_{(k)}$ expressing inverse processing of inverse orthogonal transform as decoding processing to be carried out on an output digital signal of the orthogonally transformed domain. A transform matrix generating section 13 generates a transform matrix D on the basis of these inverse orthogonal transform matrix $Ts_{(k)}^{-1}$ and orthogonal transform matrix $Td_{(k)}$, and a signal transforming section 14 causes the transform matrix D to act on the input digital signal 15, thus finding an output digital signal 16 of the orthogonally transformed domain. Thus, by carrying out transform processing such as resolution transform in the orthogonally transformed domain with respect to the input digital signal of the orthogonally transformed domain, the quantity of calculation can be reduced and calculation errors can be reduced, thereby enabling realization of high-speed transform of high quality.

FIG.1

## Description

Technical Field

This invention relates to digital signal transforming method and device, transform matrix generating method and device, and a providing medium for carrying out resolution transform and base transform with respect to digital signals in a frequency domain obtained by orthogonal transform such as DCT (discrete cosine transform).

Background Art

Conventionally, orthogonal transform coding such as DCT (discrete cosine transform) coding has been known as a coding system for efficiently compression-coding still picture data and dynamic picture data. In handling such digital signals on which orthogonal transform has been carried out, it is sometimes necessary to change the resolution or transform base.

For example, in the case where a first orthogonal transform digital signal having a resolution of 720×480 pixels as an example of home digital video format is to be transformed to a second orthogonal transform digital signal having a resolution of 352×240 pixels as a so-called MPEG1 format, inverse orthogonal transform is carried out on the first signal to restore a signal on the time base, and then transform processing such as interpolation and thinning is carried out to perform orthogonal transform again. In this manner, it is often the case that the orthogonally transformed digital signal is inversely transformed once to restore the original signal, then processed by various transform operations, and then orthogonally transformed again.

Meanwhile, a large amount of calculation is generally required for orthogonal transform and inverse orthogonal transform, and in the case where resolution transform is carried out as described above, orthogonal transform and inverse orthogonal transform need be carried out other than processing of resolution transform. Therefore, efficient processing cannot be realized. Also, since errors are accumulated by increase in amount of calculation, there is a problem of deterioration in signals.

Disclosure of the Invention

In view of the foregoing status of the art, it is an object of the present invention to provide digital signal transforming method and device, transform matrix generating method and device, and a providing medium which enable transform processing such as resolution transform with simple processing and less deterioration in signals.

To solve the above-described problem, according to the present invention, an inverse orthogonal transform matrix $Ts^{-1}$ for inverse orthogonal transform and an orthogonal transform matrix $Td$ for orthogonal transform are generated, and a transform matrix $D$ is generated by using the generated inverse orthogonal transform matrix $Ts^{-1}$ and orthogonal transform matrix $Td$. Then, transform processing is carried out in an orthogonally transformed domain by using the transform matrix $D$ with respect to an input digital signal of the orthogonally transformed domain, thus obtaining an output digital signal of the orthogonally transformed domain.

The input digital signal is a digital signal obtained by orthogonally transforming an original signal of the time domain by using an orthogonal transform matrix $Ts$ corresponding to the inverse orthogonal transform matrix $Ts^{-1}$, and the output digital signal is decoded by using an inverse orthogonal transform matrix $Td^{-1}$ corresponding to the orthogonal transform matrix $Td$ so as to be transformed to a signal of the time or spatial domain.

It is preferred that the original signal is orthogonally transformed by using an orthogonal transform matrix $Ts_{(k)}$ of a base length of k for each transform block having a length of k to generate the input digital signal, and that continuous signals having a length of $L (= k×m)$ consisting of adjacent m blocks of the input digital signal are transformed to one block having a length of N.

The transform matrix $D$ is generated by arranging m units of the inverse orthogonal transform matrices $Ts_{(k)}^{-1}$ on a diagonal axis to generate an L-order square matrix A, then taking out N units of low-frequency base vectors of an orthogonal transform matrix $Td_{(L)}$ having a base length of L to generate a matrix B consisting of N rows and L columns, and using an equation of

$$D = \alpha \cdot B \cdot A$$

where $\alpha$ is a coefficient for level correction of a scalar value or a vector value.

Thus, the input digital signal can be contracted to N/L in the orthogonally transformed domain. Particularly, where $N = L$, the transform matrix $D$ becomes a matrix for transforming the transform base. If the orthogonal transform matrices $Ts$ and $Td$ differ from each other, transform in accordance with the orthogonal transform system is carried out.

Also, by using an n-dimensional digital signal as the input digital signal and then carrying out transform processing in the orthogonally transformed domain using the transform matrix D for each dimension, an n-dimensional output digital signal can be obtained. In this case, if the transform scale factor varies from dimension to dimension, transform matrices may be generated for the respective dimensions, and transform processing may be carried out with a scale factor varying from dimension to dimension, using these transform matrices.

In the case where expansion processing of resolution is to be carried out in the orthogonally transformed domain, the transform block of the orthogonally transformed input digital signal may be used as it is and transformed to a block having a length m times that of the original block by complementing the transform block with a predetermined value, to obtain the output digital signal of the orthogonally transformed domain.

In addition, according to the present invention, a connection matrix for connecting at least one block having a predetermined number of samples of the input digital signal of an orthogonally transformed domain to form meta-blocks and for carrying out inverse orthogonal transform is generated, and a selection matrix for selecting and taking out a portion to be a processing target from the meta-blocks is generated. Then, a processing matrix for carrying out desired signal processing with respect to the selected portion is generated, and a division matrix having a function to carry out orthogonal transform on the processed signal and divide the signal into at least one block is generated. A transform matrix for carrying out transform processing with respect to the signal of the orthogonally transformed domain is generated by using the connection matrix, the selection matrix, the processing matrix and the division matrix. The transform matrix is applied to the orthogonally transformed input digital signal for each meta-block to obtain an output digital signal.

Brief Description of the Drawings

Fig. 1 is an illustrative view for explaining a digital signal transforming method as a first embodiment of the present invention.
Fig.2 is a view showing an example of an input/output signal in the first embodiment of the present invention.
Fig.3 is a view showing an example of signals before and after transform in the case where the first embodiment of the present invention is applied to a two-dimensional digital signal.
Fig.4 is an illustrative view for explaining an operation for multiplying an input digital signal by a transform matrix.
Fig.5 is an illustrative view for explaining processing for obtaining a two-dimensional output digital signal by causing a transform matrix D to act twice on a two-dimensional input digital signal.
Fig.6 is a flowchart for explaining an example of processing procedure for generating a resolution transform matrix.
Fig.7 is a flowchart for explaining an example of processing procedure for carrying out resolution transform in the frequency domain by using a resolution transform matrix.
Fig.8 is an illustrative view for explaining expansion processing in the frequency domain.
Fig.9 is an illustrative view for explaining transform between two formats having different sampling ratios of component signals including a luminance signal and a color-difference signal.
Fig.10 is a flowchart for explaining an example of processing procedure for generating a resolution transform matrix in the case where the contraction ratio varies from dimension to dimension.
Fig.11 is a flowchart for explaining an example of processing procedure for carrying out resolution transform in the frequency domain by using a resolution transform matrix in the case where the contraction ratio varies from dimension to dimension.
Fig.12 is an illustrative view for explaining a digital signal transforming method as a second embodiment of the present invention.
Fig.13 is a view showing an example of an input/output signal in the second embodiment of the present invention.
Fig.14 is a view for explaining functions of a connection matrix A, a selection matrix W, a processing matrix X, and a division matrix B.
Fig.15 is a view for explaining the case where an input signal is divided into meta-blocks so that only a necessary portion is selected and processed.
Fig.16 is a flowchart for explaining procedure for generating the connection matrix A.
Fig.17 is a flowchart for explaining procedure for initializing parameters.
Fig.18 is a flowchart for explaining procedure for generating a selection matrix W.
Fig. 19 is a flowchart for explaining procedure for generating a processing matrix X.
Fig.20 is a flowchart for explaining procedure for generating a division matrix B.
Fig.21 is a view for explaining orthogonal transform of a color-difference signal of the DV (digital video) standard.
Fig.22 is a view for explaining resolution transform processing with respect to the color-difference signal of the DV (digital video) standard.
Fig.23 is a block diagram showing the schematic structure of hardware used in the embodiment of the present invention.

Fig.24 is systematic view showing an example of a system for transform from the DV standard to the MPEG1 standard according to the embodiment of the present invention.

Fig.25 is a block diagram showing an example of a signal transforming device for transform from the DV standard to the MPEG1 standard according to the embodiment of the present invention.

Best Mode for Carrying Out the Invention

Digital signal transforming method and device according to the present invention are adapted for transform processing such as resolution transform and base transform of an orthogonally transformed digital signal without requiring inverse orthogonal transform and orthogonal transform again. Also, a transform matrix generating method according to the present invention is adapted for generating a transform matrix for directly carrying out the resolution transform and base transform in an orthogonally transformed domain such as the frequency domain or compressed domain.

As a specific example of picture coding including orthogonal transform coding, there is a so-called MPEG coding standard. This MPEG is an abbreviation of the Moving Picture Experts Group of ISO/IEC JTC1/SC29 (International Organization for Standardization/International Electrotechnical Commission, Joint Technical Committee 1/Sub Committee 29). There are an ISO11172 standard as the MPEG1 standard and an ISO13818 standard as the MPEG2 standard. Among these international standards, ISO11172-1 and ISO13818-1 are standardized in the item of multimedia multiplexing, and ISO11172-2 and ISO13818-2 are standardized in the item of video, while ISO11172-3 and ISO13818-3 are standardized in the item of audio.

In accordance with ISO11172-2 or ISO13818-2 as the picture compression coding standard, a picture signal is compression-coded on the picture (frame or field) basis by using the correlation of pictures in the time or spatial direction, and the use of the correlation in the spatial direction is realized by using DCT (discrete cosine transform) coding.

In addition, this orthogonal transform such as DCT is broadly employed for various types of picture information compression coding such as JPEG (Joint Photographic Coding Expert Group). In general, orthogonal transform enables compression coding with high compression efficiency and excellent reproducibility by transforming an original signal of the time domain or spatial domain to an orthogonally transformed domain such as the frequency domain.

Preferred embodiments of the digital signal transforming method and device, the transform matrix generating method and device, and the providing medium will now be described with reference to the drawings.

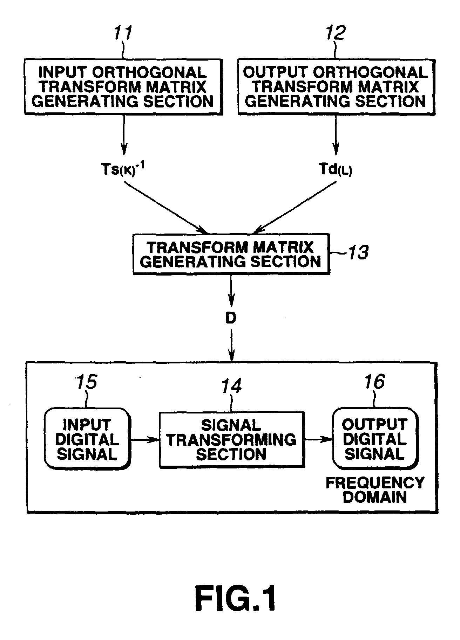

Fig.1 is an illustrative view for explaining a digital signal transforming method and a transform matrix generating method as a first embodiment of the present invention.

In Fig.1, an input orthogonal transform matrix generating section 11 generates an inverse matrix $Ts_{(k)}^{-1}$ of an orthogonal transform matrix $Ts_{(k)}$ expressing orthogonal transform that has been carried out in an input digital signal in advance, and sends the inverse matrix to a transform matrix generating section 13. An output orthogonal transform matrix generating section 12 generates an orthogonal transform matrix $Td_{(L)}$ corresponding to an inverse transform matrix $Td_{(L)}^{-1}$ expressing inverse orthogonal transform that is to be carried out on an output digital signal, and sends the orthogonal transform matrix to the transform matrix generating section 13. The transform matrix generating section 13 generates a transform matrix D for carrying out transform processing such as resolution transform in the frequency domain, and sends the transform matrix to a signal transforming section 14. The signal transforming section 14 transforms an input digital signal 15 that has been transformed to the frequency domain by orthogonal transform, while maintaining the orthogonally transformed domain such as the frequency domain, and generates an output digital signal 16.

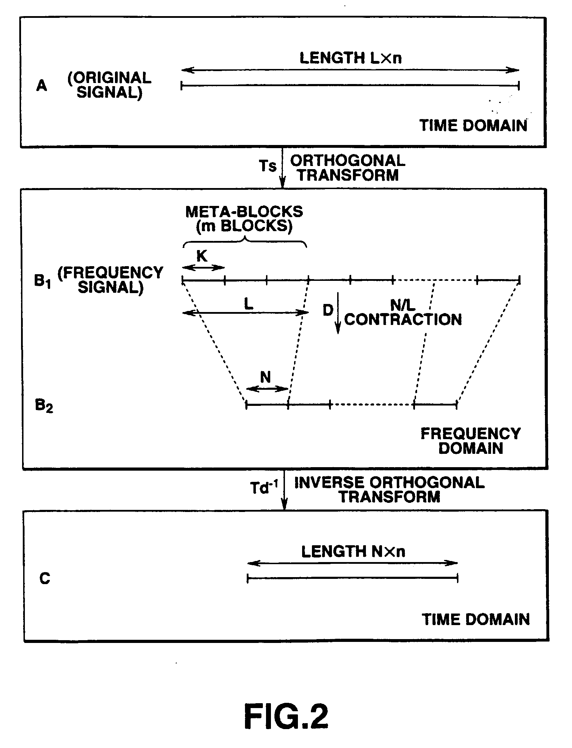

Specifically, as shown in Fig.2, a signal (original signal) A of the original time domain (or spatial domain) is transformed to the frequency domain by using the orthogonal transform matrix $Ts_{(k)}$ to generate a frequency signal $B_1$ (corresponding to the input digital signal 15). This frequency signal $B_1$ is contracted to N/L (or expanded) by the signal transforming section 14 to generate a frequency signal $B_2$ (corresponding to the output digital signal 16). This frequency signal $B_2$ is inversely orthogonally transformed by using the inverse transform matrix $Td_{(L)}^{-1}$ to generate a signal C of the time domain.

In the example of Fig.2, the one-dimensional original signal A is orthogonally transformed for each transform block having a length of k, and m units of adjacent blocks of the resultant transform blocks of the frequency domain, that is, continuous frequency signals having a length of L (= k×m), are transformed to one block having a length of N (where N < L), that is, contracted to N/L as a whole.

In the following description, a matrix (orthogonal transform matrix) in which orthogonal transform base vectors $\langle \underline{e}_1, \underline{e}_2, ..., \underline{e}_n \rangle$ having a length of n are arranged in the respective rows is expressed as $T_{(n)}$, and an inverse transform matrix thereof is expressed as $T_{(n)}^{-1}$. In this description, $\underline{x}$ denotes an x vector expression. In this case, each matrix is an n-order square matrix. For example, a one-dimensional DCT transform matrix $T_{(8)}$ in the case of n = 8 is expressed by the following equation (1).

4

$$
\begin{pmatrix} e1 \\ e2 \\ e3 \\ e4 \\ e5 \\ e6 \\ e7 \\ e8 \end{pmatrix} = T_{(8)} = \frac{1}{2}\begin{pmatrix}
1/\sqrt{2} & 1/\sqrt{2} & 1/\sqrt{2} & 1/\sqrt{2} & 1/\sqrt{2} & 1/\sqrt{2} & 1/\sqrt{2} & 1/\sqrt{2} \\
\cos(\pi/16) & \cos(3\pi/16) & \cos(5\pi/16) & \cos(7\pi/16) & \cos(9\pi/16) & \cos(11\pi/16) & \cos(13\pi/16) & \cos(15\pi/16) \\
\cos(2\pi/16) & \cos(6\pi/16) & \cos(10\pi/16) & \cos(14\pi/16) & \cos(18\pi/16) & \cos(22\pi/16) & \cos(26\pi/16) & \cos(30\pi/16) \\
\cos(3\pi/16) & \cos(9\pi/16) & \cos(15\pi/16) & \cos(21\pi/16) & \cos(27\pi/16) & \cos(33\pi/16) & \cos(39\pi/16) & \cos(45\pi/16) \\
\cos(4\pi/16) & \cos(12\pi/16) & \cos(20\pi/16) & \cos(28\pi/16) & \cos(36\pi/16) & \cos(44\pi/16) & \cos(52\pi/16) & \cos(60\pi/16) \\
\cos(5\pi/16) & \cos(15\pi/16) & \cos(25\pi/16) & \cos(35\pi/16) & \cos(45\pi/16) & \cos(55\pi/16) & \cos(65\pi/16) & \cos(75\pi/16) \\
\cos(6\pi/16) & \cos(18\pi/16) & \cos(30\pi/16) & \cos(42\pi/16) & \cos(54\pi/16) & \cos(66\pi/16) & \cos(78\pi/16) & \cos(90\pi/16) \\
\cos(7\pi/16) & \cos(21\pi/16) & \cos(35\pi/16) & \cos(49\pi/16) & \cos(63\pi/16) & \cos(77\pi/16) & \cos(91\pi/16) & \cos(105\pi/16)
\end{pmatrix}
\qquad \cdots (1)
$$

In Fig. 1, when the size of the orthogonal transform block with respect to the input digital signal 15 that has been orthogonally transformed to the frequency domain by using the orthogonal transform matrix $Ts_{(k)}$ is k, that is, when the base length is equal to k, the input orthogonal transform matrix generating section 11 generates the inverse orthogonal transform matrix $Ts_{(k)}^{-1}$, and the output orthogonal transform matrix generating section 12 generates the orthogonal transform matrix $Td_{(L)}$ having the base length of L (= k×m) .

At this point, the inverse orthogonal transform matrix $Ts_{(k)}^{-1}$ generated by the input orthogonal transform matrix generating section 11 corresponds to inverse processing of orthogonal transform processing in generating the input digital signal 15, and the orthogonal transform matrix $Td_{(L)}$ corresponds to inverse processing of inverse orthogonal transform processing in decoding the output digital signal transformed by the signal transforming section 14, that is, in transforming the signal to the time domain. Both these orthogonal transform matrix generating sections 11 and 12 can generate base vectors of arbitrary lengths.

The orthogonal transform matrix generating sections 11 and 12 may be identical orthogonal transform matrix generating sections. In such case, the orthogonal transform matrices $Ts_{(k)}$ and $Td_{(L)}$ become orthogonal transform matrices of the same type, with their base lengths alone differing from each other. The orthogonal transform matrix generating section exists for each of different orthogonal transform systems.

Next, the transform matrix generating section 13 generates an L-order square matrix A by arranging, on the diagonal, m units of inverse orthogonal transform matrices $Ts_{(k)}^{-1}$ generated by the input orthogonal transform matrix generating section 11, as expressed by the following equation (2). When the base length of the output digital signal 16 is equal to N, the transform matrix generating section 13 takes out N units of low-frequency base vectors of the orthogonal transform matrix $Td_{(L)}$ and generates a matrix B consisting of N rows and L columns.

$$A = \begin{pmatrix} Ts_{(k)}^{-1} & & & \\ & Ts_{(k)}^{-1} & & 0 \\ & & \ddots & \\ & 0 & & Ts_{(k)}^{-1} \\ & & & & Ts_{(k)}^{-1} \end{pmatrix} \quad \cdots (2)$$

$$B = \begin{pmatrix} \underline{e_1} \\ \underline{e_2} \\ \vdots \\ \underline{e_N} \end{pmatrix} = \begin{pmatrix} \underline{e_{11}} & \underline{e_{11}} & \cdots & \underline{e_{1L-1}} & \underline{e_{1L}} \\ \underline{e_{21}} & \underline{e_{22}} & & \underline{e_{2L-1}} & \underline{e_{2L}} \\ \vdots & & \ddots & & \vdots \\ \underline{e_{N1}} & \underline{e_{N2}} & & \underline{e_{NL-1}} & \underline{e_{NL}} \end{pmatrix} \quad \cdots (3)$$

In this expression, however, $\underline{e}_1$, $\underline{e}_2$, ..., $\underline{e}_N$ are N units of low-frequency base vectors when $Td_{(L)}$ is expressed by base vectors as follows.

$$Td_{(L)} = \begin{pmatrix} \underline{e}_1 \\ \underline{e}_2 \\ \underline{e}_3 \\ \vdots \\ \underline{e}_L \end{pmatrix} = \begin{pmatrix} \underline{e}_{11} & \underline{e}_{12} & \cdots & \underline{e}_{1L-1} & \underline{e}_{1L} \\ \underline{e}_{21} & \underline{e}_{22} & \cdots & \underline{e}_{2L-1} & \underline{e}_{2L} \\ \underline{e}_{31} & \underline{e}_{32} & \cdots & \underline{e}_{3L-1} & \underline{e}_{3L} \\ \vdots & & \ddots & & \vdots \\ \underline{e}_{L1} & \underline{e}_{L2} & \cdots & \underline{e}_{LL-1} & \underline{e}_{LL} \end{pmatrix} \quad \cdots(4)$$

Then, an equation of

$$D = \alpha \cdot B \cdot A \tag{5}$$

is calculated to generate the matrix D consisting of N rows and L columns. This matrix D is a transform matrix for transforming the resolution at the contraction rate (or expansion rate) of N/L. In this equation, $\alpha$ is a scalar value or vector value and is a coefficient for level correction.

The signal transforming section 14 of Fig. 1 collects m blocks of an input digital signal $B_1$ of the frequency domain into a group, and divides the signal into meta-blocks having a size L (where one meta-block consisting of m blocks). If the length of the input digital signal $B_1$ is not a multiple of L, the signal is supplemented and stuffed with dummy data such as 0 to make a multiple of L. The meta-blocks thus generated are expressed by Mi (where i = 0, 1, 2, ...).

The signal transforming section 14 of Fig. 1 multiplies each meta-block Mi by the transform matrix D.

$$Ci = D \cdot Mi \tag{6}$$

The resultant vector Ci of the length of N is a frequency vector signal obtained by contracting each meta-block to N/L. By carrying out this processing with respect to all the meta-blocks, a signal $B_2$ contracted to N/L as a whole can be obtained.

The resultant output digital signal $B_2$ can be transformed to the signal on the time base (C of Fig.2) by using the inverse orthogonal transform matrix $Td_{(N)}^{-1}$ having the base length of N.

If N is not equal to k, the transform matrix D expressed by equation (5) becomes a transform matrix for carrying out resolution transform and transform of the base length with a scale factor of N/L. Particularly when N is equal to L, the transform matrix becomes a matrix for transforming the transform base. If the orthogonal transform matrices $Ts_{(k)}$ and $Td_{(L)}$ differ from each other, transform in accordance with the orthogonal transform system is carried out.

Particularly, if the orthogonal transform matrices $Ts_{(k)}$ and $Td_{(L)}$ are identical to each other and N is equal to k, the same decoder as that for the input digital signal can be used for the output digital signal in the frequency domain, that is, the same inverse orthogonal transform matrix can be used. In this case, the transform matrix D becomes a resolution transform matrix for contracting the resolution to 1/m without transforming the base.

The foregoing operation can be split in accordance with the dimension of the original signal and can be easily extended in the case where two or more dimensions are employed. Thus, the foregoing operation can be applied to various media of audio, still picture, dynamic picture and the like. For example, with respect to a two-dimensional signal, the above-described transform may be carried out first in each row and then similarly applied to each column.

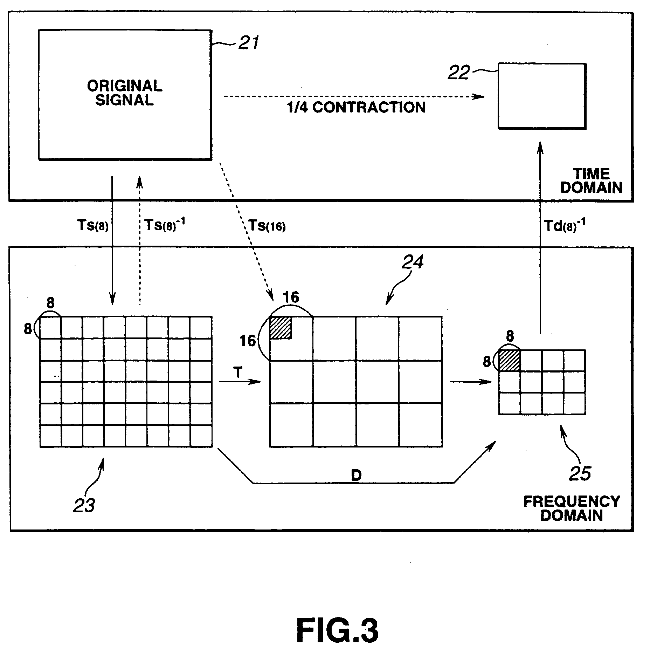

Fig.3 is a view schematically showing an example of signals before and after transform in the time domain and the frequency domain in the case where the first embodiment of the present invention is applied to a two-dimensional digital signal such as a picture signal. In this example of Fig.3, an original signal 21 as a two-dimensional digital signal such as a picture signal is contracted to 1/2 in the longitudinal and lateral directions, respectively, and thus transformed to a two-dimensional digital signal 22.

In Fig.3, the original signal 21 is divided into blocks each having 8 longitudinal × 8 lateral pixels, and transformed to a signal 23 of the frequency domain based on the block of 8×8 as a unit by using an orthogonal transform matrix $Ts_{(8)}$ of DCT (discrete cosine transform) or the like having a base length of 8. This signal 23 is used as an input digital signal of the frequency domain. With respect to the two-dimensional input digital signal 23 in which one block consists of 8×8 frequency domain data, base transform such as to transform a base having a length of 8 to a base having a length of 16 is carried out by using the base transform matrix T as described above, thus generating a digital signal 24 on the frequency base in which one block consists of 16×16 data. Then, only 8×8 data of a low-frequency portion shaded in Fig.3, of this one block consisting of 16×16 data, is taken out of each block and such 8×8 data of the respective blocks are collected in a group, thereby obtaining an output digital signal 25 of the frequency domain. By transforming (or decoding) this output digital signal 25 to the digital signal 22 of the time domain by using an inverse orthogonal transform matrix $Td_{(8)}^{-1}$ having a base length of 8, a signal resulting from resolution transform to contract the original signal 21 of the time domain to 1/4 is obtained.

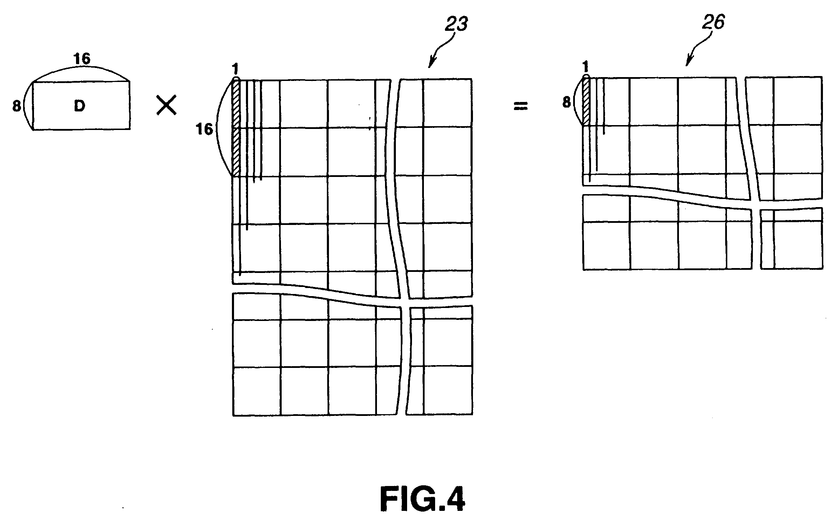

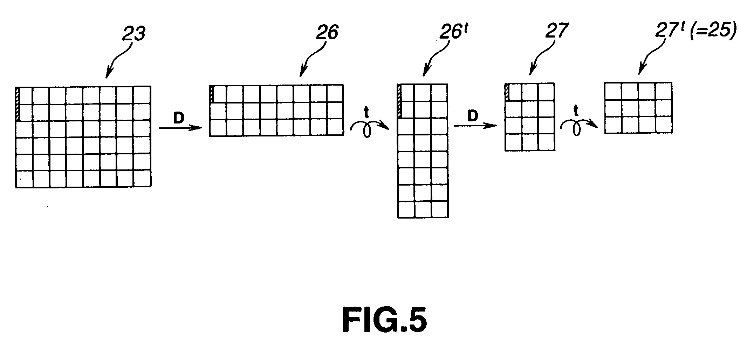

In Fig.3, the calculation to take out 8×8 low-frequency vectors in the digital signal obtained in transforming the base having a length of 8 to the base having a length of 16 is provided only by causing the transform matrix D to act directly. However, to apply the transform matrix D longitudinally and laterally to the two-dimensional frequency signal, D need be applied twice. An example of application of this transform matrix D will now be described with reference to Figs.4 and 5.

In this specific example, the base length of k of an input digital signal of the frequency domain is 8, and the length of L of a meta-block is L = 8×2 = 16 since m = 2. The base length of N of an output digital signal of the frequency domain is 8. Therefore, in accordance with the above-mentioned equation (5), the transform matrix D consists of 8×16. By multiplying one column consisting two longitudinal blocks of the input digital signal 23 of the frequency domain (16×1 or shaded portion in Fig.4) by this transform matrix D of 8×16, as shown in Fig.4, a shaded portion (8×1) of a signal 26 which is longitudinally compressed to 1/2 is obtained. Then, this processing is carried out on the entire input digital signal 23, that is, two blocks each of each column of the input digital signal 23 are multiplied by the matrix D, thereby obtaining the signal 26 having a longitudinal length which is 1/2 of the original longitudinal length and a lateral length equal to the original lateral length.

Specifically, as shown in Fig.5, the transform matrix D is applied to the input digital signal 23 to obtain the signal (matrix data) 26 having the longitudinal length which is 1/2 of the original longitudinal length. This signal 26 is transposed, that is, rows and columns are replaced to obtain a transposed signal $26^t$. By applying the transform matrix D again to the transposed signal $26^t$, a signal (matrix data) 27 having a longitudinal length (corresponding to the lateral length of the original input digital signal 23) which is 1/2 is obtained. Then, as this signal 27 is transposed to restore the original longitudinal and lateral directions, the resultant signal $27^t$ becomes the output digital signal 25 having longitudinal and lateral lengths which are 1/2 of the longitudinal and lateral lengths of the input digital signal 23, respectively.

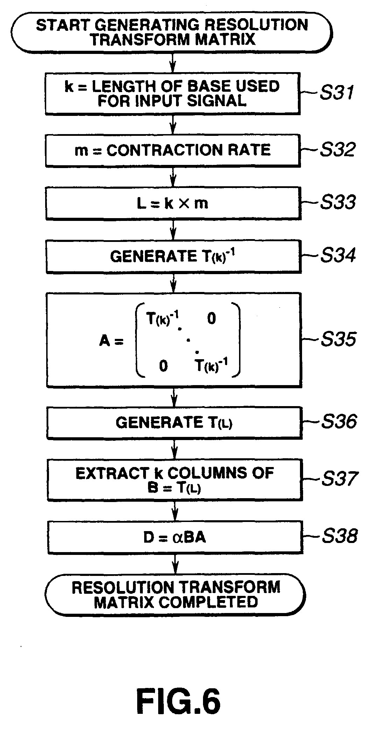

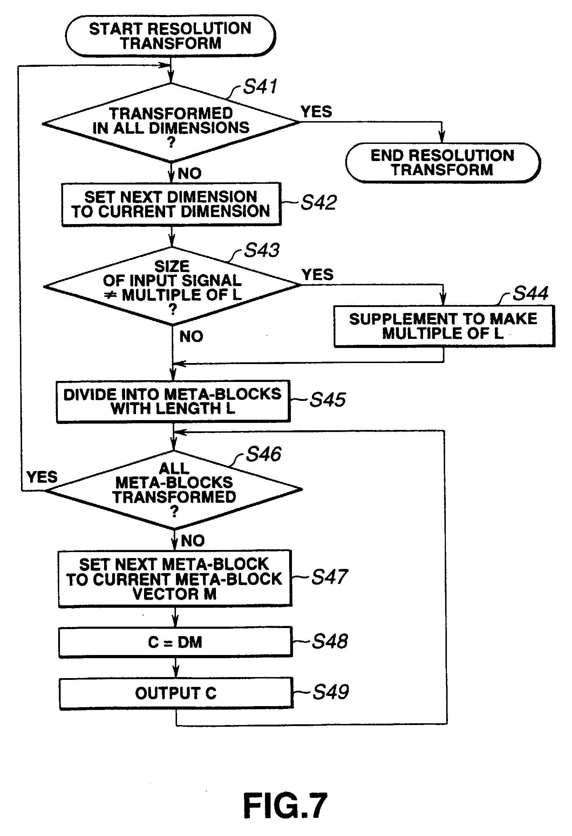

The processing of the embodiment of the present invention as described above will now be applied to the case where the resolution is contracted to 1/2 with respect to all the dimensions of a one-dimensional or plural-dimensional input digital signal. It is described hereinafter with reference to flowcharts of Figs.6 and 7.

Fig.6 is a flowchart showing the procedure for generating the transform matrix D for the above-described resolution transform, particularly, for contraction to 1/m with respect to each dimension. At the first step S31 of the flowchart of Fig.6, the length of a base used for an input signal is set to k, and the contraction rate m (for contraction to 1/m) is determined at the subsequent step S32. At the next step S33, the order L of an L-order square matrix A, which will be later described, is found by calculating $L = k \times m$. At the subsequent step S34, an inverse transform matrix $T_{(k)}^{-1}$, of a matrix (orthogonal transform matrix) $T_{(k)}$ in which orthogonal transform base vectors $\langle \underline{e}_1, \underline{e}_2, ..., \underline{e}_k \rangle$ having the length of k are arrayed in the respective rows, is generated. At the subsequent step S35, m units of the inverse transform matrices $T_{(k)}^{-1}$ are arranged on the diagonal to generate the L-order square matrix A, as expressed by equation (2). Then, at step S36, a matrix $T_{(L)}$ having a base length of L, which is to be the above-described output orthogonal transform matrix, is generated. At the subsequent step S37, k units of low-frequency base vectors of the matrix $T_{(L)}$ are taken out to generate a matrix B consisting of k rows and L columns. At the last step S38, the transform matrix D (= $\alpha BA$) is found from equation (5).

Fig.7 is a flowchart showing the processing procedure in the case where resolution transform is carried out by using the transform matrix D generated in accordance with the procedure of Fig.6. At the first step S41 of Fig.7, it is discriminated whether or not transform has been completed in all the dimensions of the input digital signal. If transform has been completed in all the dimensions, the resolution transform processing ends. At the next step S42, the next dimension is set to the current dimension. It is a matter of course that the first dimension is set to the current dimension immediately after the start of resolution transform.

At the subsequent step S43, it is discriminated whether the size of the input signal is equal to a multiple of L or not. If it is not equal to a multiple of L, the processing goes to step S44, where the input signal is supplemented with dummy data to make a multiple of L. Thus, the input signal which originally has a size equal to a multiple of L or is complemented to make a multiple of L is divided into meta-blocks having a length of L, at step S45.

At the subsequent step S46, it is discriminated whether or not all the meta-blocks have been transformed with respect to the current dimension. If transform of all the meta-blocks has been completed, the processing returns to step S41. If transform of all the meta-blocks has not been completed, the processing goes to step S47. At step S47, the next meta-block is set to the current meta-block vector M. At step S48, the current meta-block is multiplied by the transform matrix D, that is, C = DM is calculated. At step S49, this C is outputted and the processing returns to step S46.

In accordance with the procedures shown in Figs.6 and 7, with respect to the one-dimensional or plural-dimensional input digital signal, the resolution in all the dimensions can be contracted to 1/2 without changing the base. As a matter of course, once the transform matrix D is found in accordance with the procedure of Fig.6, it can be repeatedly used during the resolution transform processing of Fig.7.

Although resolution transform is carried out mainly for contraction in the above-description, resolution transform expansion is possible, too. That is, in general, the resolution can be expanded with an arbitrary scale factor by adding high-frequency components to the input digital signal of the frequency domain.

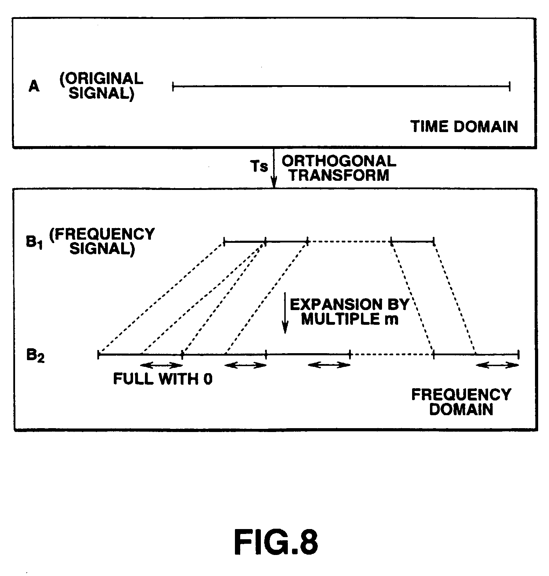

Fig.8 shows an example of an expansion method for complementing with 0 as a high-frequency component. In Fig.8, orthogonal transform like DCT as described above is carried out on an original signal A of the time domain to generate an input digital signal $B_1$ of the frequency domain. In expanding this input digital signal $B_1$ by a multiple m for each block, the original block is used as it is and the remaining portion of the expanded block is filled with 0, thereby obtaining an output digital signal $B_2$ of the frequency domain. Alternatively, the expanded digital signal may be used as the input digital signal of the above-described embodiment so as to carrying out N/L contraction transform. Complementing the high-frequency component with 0 is only an example, and more appropriate values may be used.

Meanwhile, by generating transform matrices having a plurality of different scale factors and contraction rates, the embodiment of the present invention can be applied to a plurality of component signals generated at different sampling ratios with respect to the original signal, such as a luminance signal and a color-difference signal of two-dimensional digital signals.

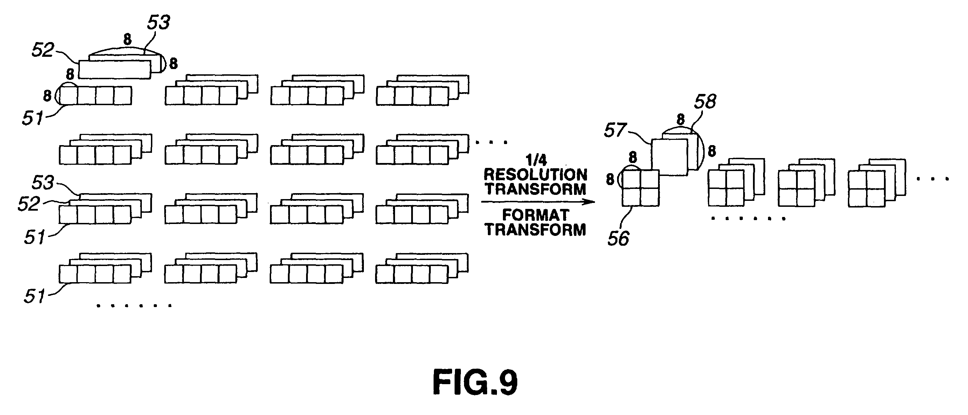

Fig.9 shows an example of transform between two formats having different sampling ratios with respect to each component such as a luminance signal or a color-difference signal. In Fig.9, one block (8×8) of each of color-difference signals 52, 53 corresponds to a group of laterally collected four blocks, each consisting of 8×8, of a luminance signal 51 of a signal before transform. Also, one block (8×8) of each of color-difference signals 57, 58 corresponds to a group of longitudinally collected two blocks and laterally collected two blocks, that is, a total of four blocks (each consisting of 8×8) of a luminance signal 56 of a signal after transform.

Thus, in transform processing shown in Fig.9, the format is transformed and the resolution is compressed to 1/2 both longitudinally and laterally. In this case, two types of resolution transform matrices of 1/2 and 1/4 without changing the base are prepared by the above-described resolution transform processing of the embodiment. The input luminance signal 51 may be transformed to the output luminance signal 56 by contracting the signal to 1/2 both longitudinally and laterally, and the input color-difference signals may be contracted to 1/4 only in the longitudinal direction.

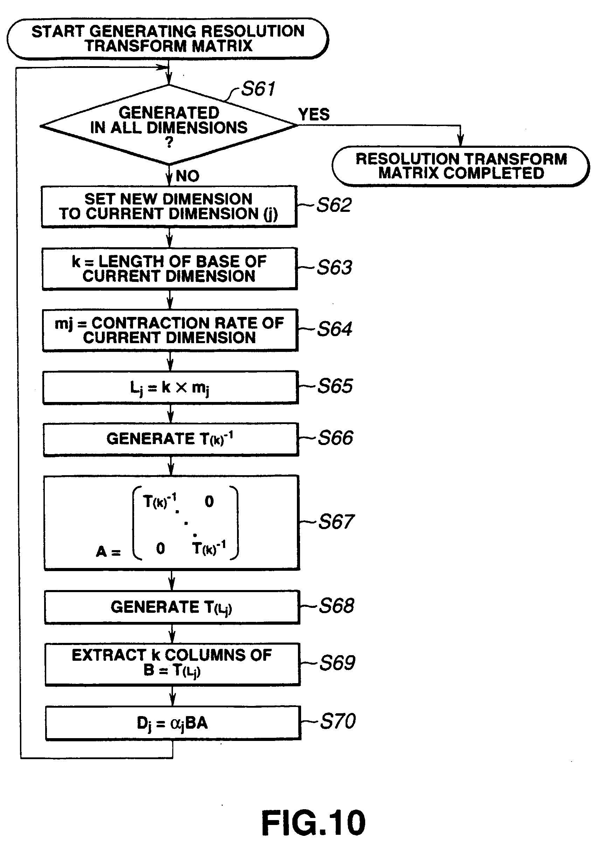

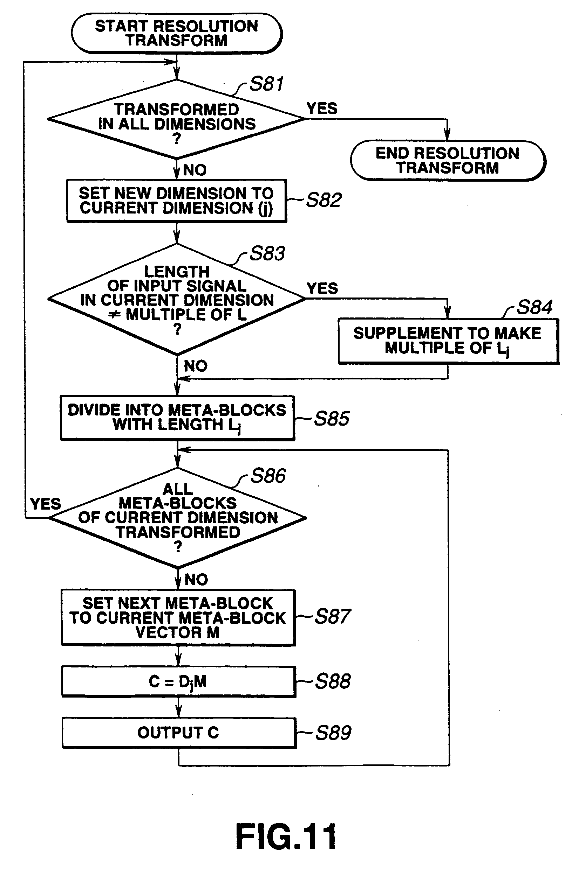

Next, the procedure for resolution transform in the case where the contraction rate varies from dimension to dimension, that is, in the case where arbitrary scale factors and contraction rates are generally used for the respective dimension, will now be described with reference to Figs. 10 and 11.

Fig.10 is a flowchart showing the procedure for generating a transform matrix for contraction in each dimension at an arbitrary contraction rate. Specifically, Fig.10 shows the procedure for generating a transform matrix $D_j$ for contraction in each dimension of n dimensions at an arbitrary contraction rate $m_j$ (j = 1, 2, ..., n). In this case, the length of a meta-block of an input digital signal of each dimension is expressed as $L_j$(j = 1, 2, ..., n) and the transform matrix is expressed as Dj(j = 1, 2, ..., n).

At the first step S61 of the flowchart of Fig. 10, it is discriminated whether or not generation of the transform matrix has been completed in all the dimensions. If generation of the transform matrix has been completed in all the dimensions, the processing for generating the resolution transform matrix ends. At the subsequent step S62, a new dimension is set to the current dimension (j). It is a matter of course that the first dimension (j = 1) is set to the current dimension immediately after the start of the processing for generating the resolution transform matrix.

At the next step S63, the length of a base used for an input signal of the current dimension is set to k, and the contraction rate $m_j$ (for contraction to $1/m_j$) is determined at the subsequent step S64. At the next step S65, the order $L_j$ of an $L_j$-order square matrix A, which will be later described, is found by calculating $L_j = k \times m_j$. At the subsequent step S66, an inverse transform matrix $T_{(k)}^{-1}$ of the above-described orthogonal transform matrix $T_{(k)}$ is generated. At the subsequent step S67, $m_j$ units of the inverse transform matrices $T_{(k)}^{-1}$ are arranged on the diagonal to generate the $L_j$-order square matrix A. Then, at step S68, a matrix $T_{(Lj)}$ having a base length of $L_j$, which is to be the above-described output orthogonal transform matrix, is generated. At the subsequent step S69, k units of low-frequency base vectors of the matrix $T_{(Lj)}$ are taken out to generate a matrix B consisting of k rows and $L_j$ columns. At the last step S70, the transform matrix $D_j$ (= $\alpha_j$BA) is found from equation (5). In this case, $\alpha_j$ is a scalar value or a vector value for correction in the j-th dimension.

Fig.11 is a flowchart showing the processing procedure in the case where resolution transform is carried out for each dimension by using the transform matrix $D_j$ generated in accordance with the procedure of Fig.10.

At the first step S81 of Fig.11, it is discriminated whether or not resolution transform has been completed in all the dimensions of the input digital signal. If resolution transform has been completed in all the dimensions, the resolution transform processing ends. At the next step S82, a new dimension (j) is set to the current dimension.

At the subsequent step S83, it is discriminated whether the size of the input signal is equal to a multiple of $L_j$ or not. If it is not equal to a multiple of $L_j$, the processing goes to step S84, where the input signal is supplemented with dummy data to make a multiple of $L_j$. Thus, the input signal which originally has a size equal to a multiple of $L_j$ or is complemented to make a multiple of $L_j$ is divided into meta-blocks having a length of $L_j$, at step S85.

At the subsequent step S86, it is discriminated whether or not all the meta-blocks have been transformed with respect to the current dimension. If transform of all the meta-blocks has been completed, the processing returns to step S81. If transform of all the meta-blocks has not been completed, the processing goes to step S87. At step S87, the next meta-block is set to the current meta-block vector M. At step S88, the current meta-block is multiplied by the transform matrix $D_j$, that is, $C = D_j M$ is calculated. At step S89, this C is outputted and the processing returns to step S86.

In accordance with the procedures shown in Figs. 10 and 11, with respect to the n-dimensional input digital signal, the resolution can be contracted to $1/m_j$ in the j-th dimension without changing the base. Once the transform matrix $D_j$ is found in accordance with the procedure of Fig.10, it can be repeatedly used during the resolution transform processing of Fig.11.

According to the first embodiment of the present invention as described above, the transform base can be arbitrarily changed with respect to the input digital signal transformed to the frequency domain by orthogonal transform like DCT, and the resolution can be contracted with an arbitrary scale factor by adjusting the length of the base and the entire length of the output digital signal. Also, by applying the present embodiment where the orthogonal transform system and the entire length of the output digital signal are the same as those of the input digital signal, output digital signals having different base lengths can be obtained. In addition, by applying the first embodiment where the orthogonal transform system is different from that of the input digital signal, output digital signals having different orthogonal transform systems, base lengths and resolutions can be obtained. Moreover, by applying the present embodiment where the orthogonal transform system and the entire length of the output digital signal are the same as those of the input digital signal, the decoder for the input digital signal can be used as it is, and it is possible to change only the resolution. Also, by combining expansion and contraction, resolution transform with arbitrary scale factors can be realized. It can be applied not only to a one-dimensional frequency domain signal but also to a plural-dimensional frequency domain signal. In addition, since transform with arbitrary scale factors is possible, resolution transform can be carried out while the corresponding relation between components is maintained, even in the case where the size and structure of the transform block varies from component to component. Moreover, since calculation for transform is not complicated, calculation errors are not likely to occur and transform of high quality is possible. Also, since only a small quantity of calculation is required for transform, no special hardware is needed and sufficiently high-speed transform can be carried out by using software. In addition, after orthogonal transform, various types of transform can be carried out in accordance with the first embodiment, simply by expanding the compressed digital signal.

Meanwhile, in the above-described first embodiment of the present invention, a meta-block consisting of a group of several blocks is used as a processing unit. Resolution transform without changing the size of the block can be carried out only in the case where the scale factor is $1/n$ ($n = 1, 2, 3, ...$), and processing cannot be carried out on a part of meta-blocks or a part across the boundary between meta-blocks. However, by the following extension, resolution transform can be carried out with arbitrary scale factors and processing can be carried out also with respect to a partial signal having an arbitrary size across the boundary between blocks.

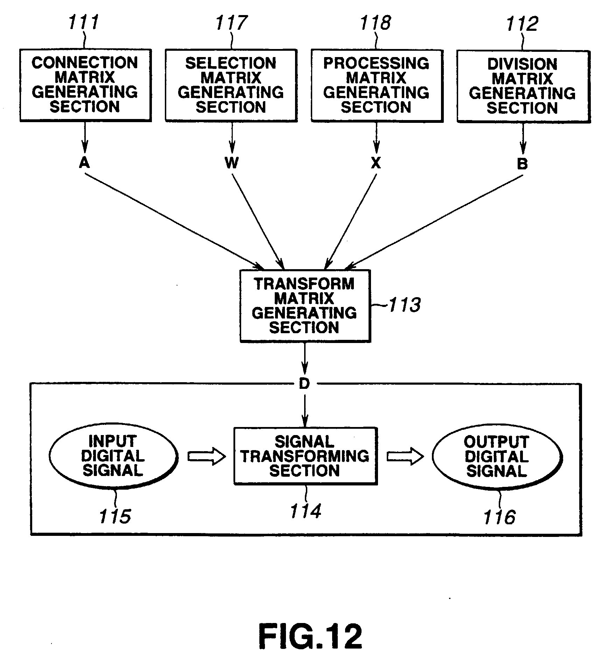

Specifically, Fig. 12 is an illustrative view for explaining a digital signal transforming method and a transform matrix generating method as a second embodiment of the present invention.

In Fig. 12, a connection matrix generating section 111 extended from the input orthogonal transform matrix generating section 11 of Fig.1, a division matrix generating section 112 extended from the output orthogonal transform matrix generating section 12 of Fig.1, a selection matrix generating section 117 for generating a selection matrix for taking out a part of meta-blocks or an arbitrary part across the boundary between meta-blocks, a processing matrix generating section 118 for generating a processing matrix for carrying out desired signal processing such as resolution transform processing, and a transform matrix generating section 113 for finding a necessary matrix from these four matrices are provided. A transform matrix D from the transform matrix generating section 113 is sent to a signal transforming section 114, and an orthogonally transformed input digital signal 115 is transformed while it is in the orthogonally transformed state. Then, the resultant signal is outputted as an output digital signal 116.

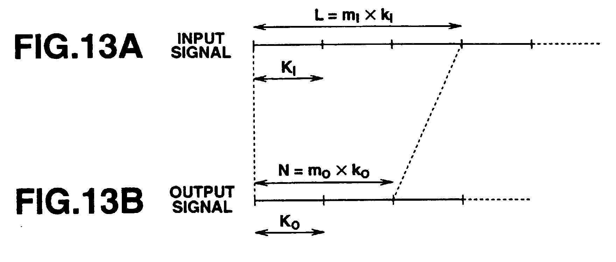

In this case, the input digital signal 115 is an orthogonally transformed signal (for example, a signal of the frequency domain) in which each meta-block consists of a group of $m_1$ blocks each having a length of $k_1$ and has a length of $L (= k_1 \times m_1)$, as shown in Fig.13A. This input digital signal 115 is transformed by using the transform matrix D from the transform matrix generating section 113, while it still is the orthogonally transformed signal. Thus, as shown in Fig. 13B, an orthogonally transformed signal in which each meta-block consists of $m_O$ blocks each having a length of $k_O$ and has a length of $N (= k_O \times m_O)$ is taken out as the output digital signal 116.

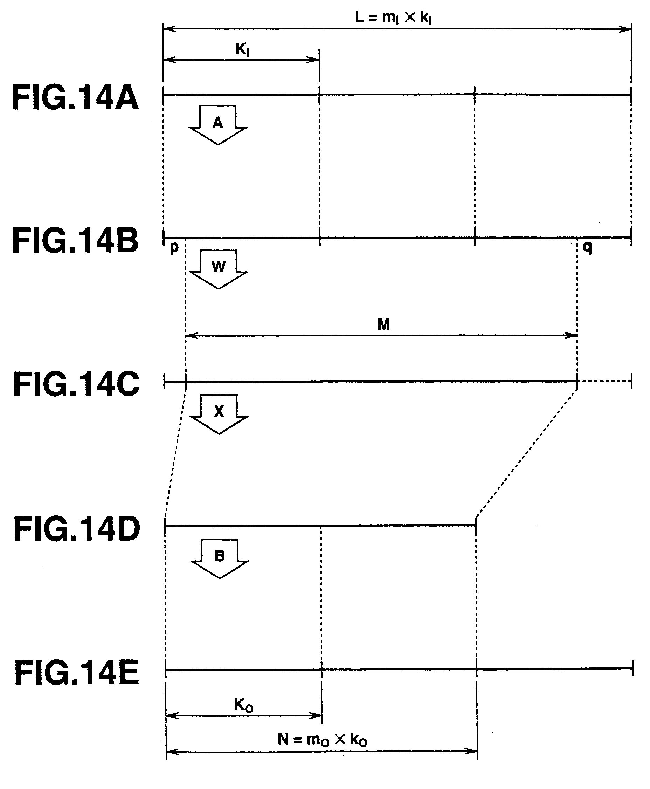

The functions of a connection matrix A from the connection matrix generating section 111, a selection matrix W from the selection matrix generating section 117, a processing matrix X from the processing matrix generating section 118, and a division matrix from the division matrix generating section 112 of Fig. 12 will now be described with reference to Fig. 14.

Fig. 14A corresponds to the above-mentioned one meta-block of the input digital signal 115. This input digital signal shown in Fig. 14A is a signal of an orthogonally transformed domain such as the frequency domain or a compressed domain coded by DCT or the like. The connection matrix A has a function to connect $m_I$ units of blocks each having a length of $k_I$ of the compressed domain (orthogonally transformed domain) into a meta-block having a length of L (= $k_I \times m_I$) and carry out inverse orthogonal transform to generate a signal shown in Fig. 14B of the time or spatial domain. The selection matrix W has a function to take out an arbitrary portion to be a processing target from the signal shown in Fig. 14B of the time or spatial domain. In the example of Fig. 14, a signal shown in Fig. 14C having a length of M from the p-th component to the q-th component of the signal shown in Fig. 14B of the time or spatial domain having the length of L is taken out. The processing matrix X is adapted for carrying out the above-described actual signal transform processing such as resolution transform or contraction/expansion in the time or spatial domain, and the user can designate a desired processing matrix as the processing matrix X. In the example of Fig. 14, the signal shown in Fig. 14C having the length of M is transformed to a signal shown in Fig. 14D having a length of N. The division matrix B is adapted for dividing the signal shown in Fig.14D of the time or spatial domain having the length of N (= $k_O \times m_O$) into $m_O$ blocks each having a block length of $k_O$ and for orthogonally transforming each of the blocks to generate a signal shown in Fig. 14E of the orthogonally transformed domain. This signal shown in Fig. 14E corresponds to the output digital signal 116.

Generation of the matrices A, W, X and B will now be described further in detail.

First, the connection matrix generating section 111 generates an inverse matrix $Ts_{(kl)}{}^{-1}$ of an orthogonal transform matrix $Ts_{(kl)}$ expressing orthogonal transform that has been carried out in advance on the input digital signal 115, and arrays $m_I$ units of the inverse matrices $Ts_{(kl)}{}^{-1}$ on the diagonal as expressed by the following equation (7) to generate an L-order square matrix, that is, a matrix consisting of L rows and L columns (L = $k_I \times m_I$). This matrix is the connection matrix A. This equation (7) corresponds to equation (2) of the first embodiment.

$$A = \begin{pmatrix} Ts_{(kl)}^{-1} & & & 0 \\ & Ts_{(kl)}^{-1} & & \\ & & \ddots & \\ 0 & & & Ts_{(kl)}^{-1} \end{pmatrix} \qquad \cdots (7)$$

Next, the division matrix generating section 112 generates an orthogonal transform matrix $Td_{(kO)}$ corresponding to an inverse transform matrix $Td_{(kO)}{}^{-1}$ expressing inverse orthogonal transform that is to be carried out on the output digital signal, and arrays $m_O$ units of the matrices $Td_{(kO)}$ on the diagonal as expressed by the following equation (8) to generate an N-order square matrix, that is, a matrix consisting of N rows and N columns (N = $k_O \times m_O$). This matrix is the division matrix B.

$$B = \begin{pmatrix} Td_{(ko)} & & & 0 \\ & Td_{(ko)} & & \\ & & \ddots & \\ 0 & & & Td_{(ko)} \end{pmatrix} \qquad \cdots (8)$$

The selection matrix generating section 117 generates the selection matrix W for selecting a portion to be a processing target from the meta-blocks as described above. This selection matrix W is a matrix in which each column has one element equal to 1 while the remaining elements are 0. For example, a matrix consisting of M rows and L columns for taking out a signal having a length of M from the p-th component to the q-th component as a processing target from a meta-block having a length of L, as shown in the selection matrix W of Fig. 14, is expressed by the following equation (9). This equation (9) expresses an M-order square matrix (consisting of M rows and M columns) such that elements of 1 are arrayed on the diagonal in a portion of M columns from a column p to a column q of L columns, while all the other elements are 0.

$$W = \begin{pmatrix} \underbrace{\begin{matrix} 0 & \cdots & 0 \\ 0 & \cdots & 0 \\ \vdots & & \vdots \\ 0 & \cdots & 0 \end{matrix}}_{P} & \underbrace{\begin{matrix} 1 & 0 & \cdots & 0 \\ 0 & 1 & \cdots & 0 \\ \vdots & \vdots & \ddots & \vdots \\ 0 & 0 & \cdots & 1 \end{matrix}}_{M(=q-p)} & \underbrace{\begin{matrix} 0 & \cdots & 0 \\ 0 & \cdots & 0 \\ \vdots & & \vdots \\ 0 & \cdots & 0 \end{matrix}}_{L-q} \end{pmatrix} \quad \cdots (9)$$

Next, the processing matrix generating section 118 generates the processing matrix X for carrying out actual signal processing such as resolution transform. With respect to this processing matrix X, the user need not be aware of processing in the orthogonally transformed domain, and can arbitrarily determine the matrix for carrying out processing at the level of the original signal of the time or spatial domain. In the example of Fig.14, the processing matrix X is a matrix consisting of N rows and M columns. However, a specific example thereof will be later described.

The transform matrix generating section 113 of Fig. 12 generates a transform matrix D consisting of N rows and L columns as calculated by the following equation (10) on the basis of the matrices generated by the matrix generating sections 111, 117, 118 and 112.

$$D = B \cdot X \cdot W \cdot A \tag{10}$$

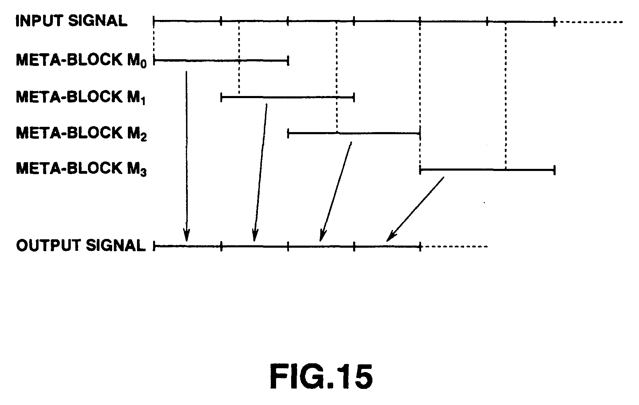

The signal transforming section 114 of Fig. 12 divides an input signal into meta-blocks $M_i$ (i = 0, 1, 2, ...) as shown in Fig.15, and applies the transform matrix D to each meta-block $M_i$, as expressed by the following equation.

$$C_i = D \cdot M_i \tag{11}$$

The spacing between the respective meta-blocks $M_i$ in Fig.15 is a range selected in accordance with the selection matrix $W_i$. The signals $C_i$ thus obtained are sequentially connected to generate an ultimate output signal. The signal $C_i$ is the above-described meta-block having the length of N, which is divided into $m_O$ blocks each having the length of $k_O$.

As the processing matrix X, the matrix for carrying out processing with respect to the original signal of the time or spatial domain may be used without being aware that the signal to be the processing target is orthogonally transformed. Thus, various types of signal processing can be used. Such processing can be exemplified by resolution transform processing with an arbitrary scale factor, processing for transforming the base of orthogonal transform, effect processing and filter processing with respect to a picture compressed in accordance with JPEG or MPEG, format transform processing from a digital video signal to MPEG, and the like.

As a specific example, the case where resolution transform of a signal is carried out with an arbitrary scale factor without changing the block lengths $k_I$, $k_O$ of input and output, that is, with $k_I = k_O = k$, will now be described.

First, the scale factor $\alpha$ of resolution transform is defined as $\alpha = a/b$ (where a, b are prospective). At this point, L = bk and N = ak are provided to generate the connection matrix and the division matrix. The selection matrix W is an L-order unit matrix, where L = M. The processing matrix X may be any matrix that enables resolution transform with respect to the original signal. In this example, a matrix as expressed by the following equation (12) is used as the processing matrix X. In this equation (12), $\alpha$ is a coefficient for level correction.

$$X = a \cdot IDCT(N) \underbrace{\begin{pmatrix} 1 & 0 & \cdots & 0 \\ 0 & 1 & \cdots & 0 \\ \vdots & \vdots & \ddots & \vdots \\ 0 & 0 & \cdots & 1 \end{pmatrix}}_{N} \underbrace{\begin{pmatrix} 0 & \cdots & 0 \\ 0 & \cdots & 0 \\ & \vdots & \\ 0 & \cdots & 0 \end{pmatrix}}_{L-N} DCT(L) \quad \cdots (12)$$

Using these matrices, the transform matrix D is generated as described above and signal transform processing is carried out, thereby enabling resolution transform with an arbitrary scale factor in the orthogonally transformed domain without restoring the original signal.

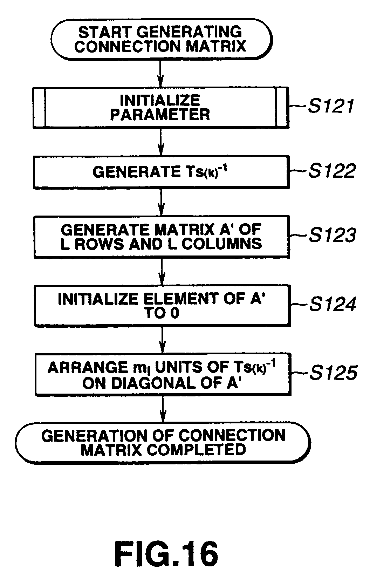

The procedures for generating matrices in the matrix generating sections 111, 117, 118 and 112 of Fig.12, in the case where resolution transform as in the specific example is carried out, will now be described with reference to flowcharts of Figs. 16 to 20. To simplify the description, the input block length $k_I$ and the output block length $k_O$ are made equal to each other, that is, $k_I = k_O = k$.

Fig. 16 is a flowchart for explaining the procedure for generating the connection matrix A in the connection matrix generating section 111.

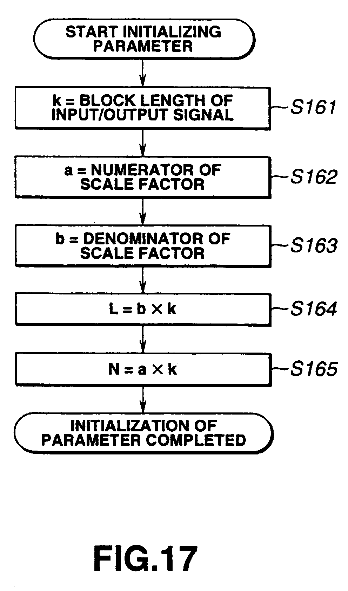

At the first step S121 in Fig.16, parameters for generating the matrix are initialized. The initialization of the parameters will be later described with reference to Fig.17. At the next step S122, the inverse orthogonal transform matrix $Ts_{(k)}^{-1}$ is generated. Next, at step S123, an arbitrary matrix A' consisting of L rows and L columns is generated, and at step S124, all the elements of the matrix A' are initialized to 0. At step S125, $m_I$ units of the inverse orthogonal transform matrices $Ts_{(k)}^{-1}$ are arranged on the diagonal of the matrix A' having 0 as its elements, thereby generating the above-described connection matrix A. As a matter of course, if the input block length $k_I$ and the output block length $k_O$ differ from each other, the inverse orthogonal transform matrix generated at step S122 is $Ts_{(kI)}^{-1}$.

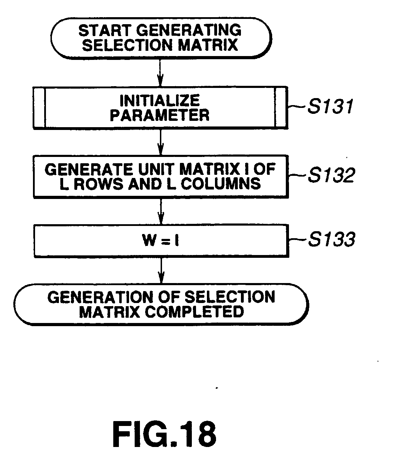

Fig. 17 is a flowchart showing an example of the procedure for initializing the parameters at step S121 of Fig.16. At step S161 in Fig.17, the input/output block length is expressed as k, and at steps S162 and S163, the numerator a and the denominator b of the scale factor for the above-described resolution transform are set. At step S164, $L = b \times k$ is set, and at step S165, $N = a \times k$ is set. This initialization of the parameters is similarly used in the procedures for generating the matrices of Figs. 18 to 20, which will be described hereinafter.

Fig. 18 is a flowchart for explaining the procedure for generating the selection matrix W in the selection matrix generating section 117. At the first step S131 in Fig.18, the initialization of the parameters described with reference to Fig. 17 is carried out. At the next step S132, a unit matrix I consisting of L rows and L columns is generated. At the subsequent step S133, the selection matrix W is set as the unit matrix I.

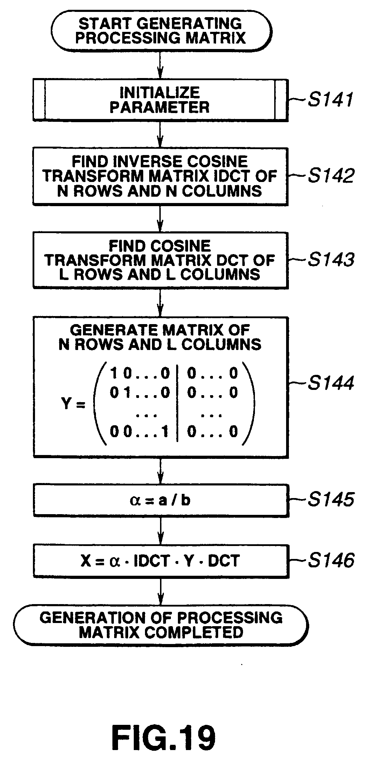

Fig. 19 is a flowchart for explaining the procedure for generating the processing matrix X in the processing matrix generating section 118. At the first step S141 in Fig. 19, the initialization of the parameters described with reference to Fig. 17 is carried out. At step S142, an inverse cosine transform matrix IDCT consisting of N rows and N columns is found. At step S143, a cosine transform matrix DCT consisting of L rows and L columns is found. At the subsequent step S144, a matrix Y consisting of N rows and L columns is generated. At step S145, the scale factor of the resolution $\alpha = a/b$ is found. At the subsequent step S146, the processing matrix X is found from an equation corresponding to the above-described equation (12).

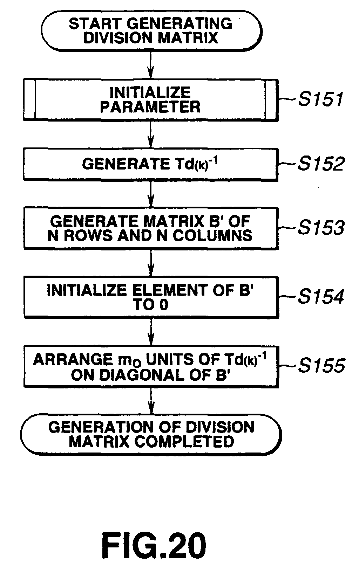

Fig.20 is a flowchart for explaining the procedure for generating the division matrix B in the division matrix generating section 112. At the first step S151 in Fig.20, the initialization of the parameters described with reference to Fig. 17 is carried out. At step S152, the inverse orthogonal transform matrix $Td_{(k)}^{-1}$ is generated. At step S153, an arbitrary matrix B' consisting of N rows and N columns is generated. At step S154, all the elements of the matrix B' are initialized to 0. At step S155, $m_O$ units of the inverse orthogonal transform matrices $Td_{(k)}^{-1}$ are arranged on the diagonal of the matrix B', thereby generating the division matrix B.

As another method for carrying out resolution transform, it is allowable to extract only a necessary portion from meta-blocks $M_i$ (i = 0, 1, 2, ...) by using the selection matrix, as shown in Fig.15, and then carry out contraction/expansion. This method is limited in degree of freedom of scale factor in comparison to the foregoing method. However, with this method, since the size of the transform matrix can be restrained to a small size in the case where the numerator and the denominator of the scale factor have large values, transform can be carried out at a higher speed.

Next, application of the second embodiment to a multi-dimensional signal will now be described. In this case, by selecting the processing matrix X which is not dependent on the dimension of the signal, transform operation as a whole can be carried out independently for each dimension. Thus, the second embodiment can be easily extended to signal processing of the multi-dimensional signal. For example, in processing a two-dimensional signal such as a picture signal, first, processing in the longitudinal direction may be carried out, and then processing in the lateral direction may be carried out. Actually, each of the above-described resolution transform processing can be extended to multi-dimensional signal processing, and can be used for resolution transform of compressed picture information of so-called JPEG or MPEG.

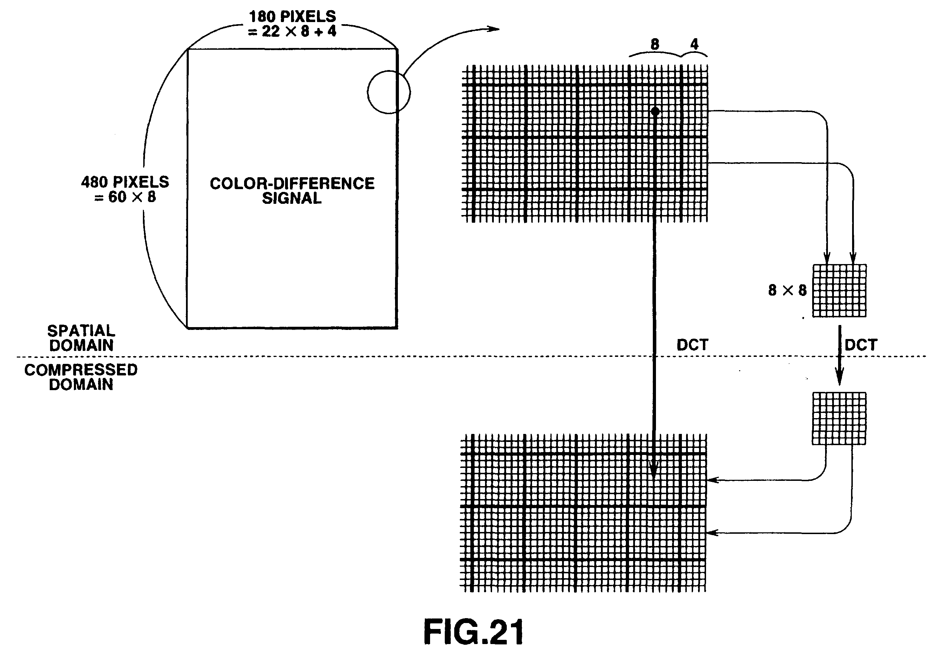

Next, application of the second embodiment to format transform will now be described. Depending on the format, data are saved partially in an irregular format because of various reasons. For example, in accordance with the format of the so-called DV (digital video) standard, an incomplete block of 4×8 pixels is generated at the right end of a color-difference signal as shown in Fig.21. Therefore, upper and lower two blocks are combined to virtually generate a block of 8×3 pixels for decoding.

Specifically, since the color-difference signal of the DV (digital video standard) has a signal string of 180×480, division into macro-blocks each consisting of 8×8 pixels for DCT causes the horizontal remainder of 4 from 180 = (22×8)+4 and hence generates a block of 4×8 at the right end, as shown in Fig.21. Thus, in accordance with the DV standard, in coding the color-difference signal, vertically adjacent two blocks which are blocks of 4× 8 generated at the right end as shown in Fig.21 are combined to constitute a block of 8×8, and then DCT coding is carried out.

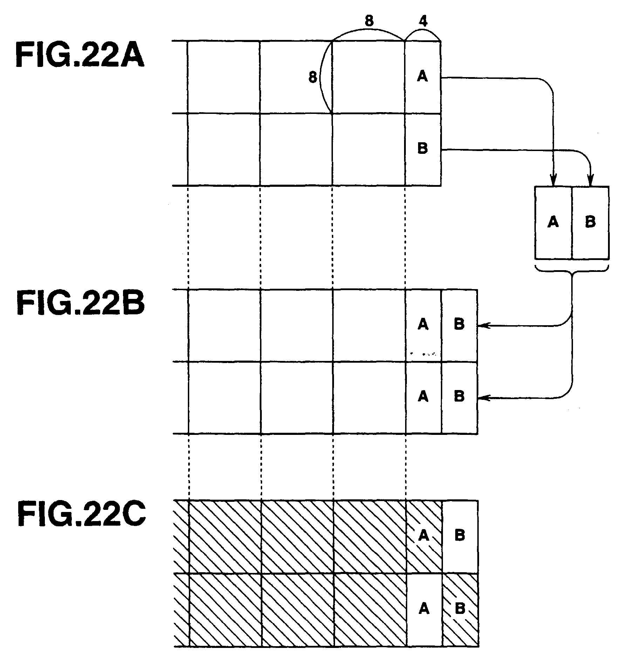

Therefore, in order to carry out processing like resolution transform on the signal of the DV standard, it is necessary to combined vertically adjacent blocks A, B which are blocks of 4×8 at the right end as shown in Fig. 22A, then generate and code a block of 8×8 as shown in Fig.22B, and then carry out signal processing only on a shaded portion shown in Fig.22C, that is, a portion where information about that portion is arranged, as a processing target.

Even with such an irregular format, processing can be satisfactorily carried out by properly selecting the selection matrix W.

For example, in processing the color-difference signal of the DV standard as described above, a selection matrix $W_1$ expressed by the following equation (13) and a selection matrix $W_2$ expressed by the following equation (14) are properly used in accordance with the value of the y-coordinate of the block, thereby enabling effective processing with respect to the shaded portion of Fig.22C.

$$W_1 = \left( \begin{array}{ccc|cccc|cccc|cccc} 0 & \dots & 0 & 1 & 0 & \dots & 0 & 0 & 0 & 0 & 0 & 0 & 0 & 0 & 0 \\ 0 & \dots & 0 & 0 & 1 & \dots & 0 & 0 & 0 & 0 & 0 & 0 & 0 & 0 & 0 \\ & \vdots & & \vdots & \vdots & \ddots & \vdots & & \vdots & & & & \vdots & & \\ 0 & \dots & 0 & 0 & 0 & \dots & 1 & 0 & 0 & 0 & 0 & 0 & 0 & 0 & 0 \\ \hline 0 & \dots & 0 & 0 & 0 & \dots & 0 & 1 & 0 & 0 & 0 & 0 & 0 & 0 & 0 \\ 0 & \dots & 0 & 0 & 0 & \dots & 0 & 0 & 1 & 0 & 0 & 0 & 0 & 0 & 0 \\ 0 & \dots & 0 & 0 & 0 & \dots & 0 & 0 & 0 & 1 & 0 & 0 & 0 & 0 & 0 \\ 0 & \dots & 0 & 0 & 0 & \dots & 0 & 0 & 0 & 0 & 1 & 0 & 0 & 0 & 0 \end{array} \right) \quad \cdots (13)$$

$$W_2 = \left( \begin{array}{ccc|cccc|cccc|cccc} 0 & \dots & 0 & 1 & 0 & \dots & 0 & 0 & 0 & 0 & 0 & 0 & 0 & 0 & 0 \\ 0 & \dots & 0 & 0 & 1 & \dots & 0 & 0 & 0 & 0 & 0 & 0 & 0 & 0 & 0 \\ & \vdots & & \vdots & \vdots & \ddots & \vdots & & \vdots & & & & \vdots & & \\ 0 & \dots & 0 & 0 & 0 & \dots & 1 & 0 & 0 & 0 & 0 & 0 & 0 & 0 & 0 \\ \hline 0 & \dots & 0 & 0 & 0 & \dots & 0 & 0 & 0 & 0 & 0 & 1 & 0 & 0 & 0 \\ 0 & \dots & 0 & 0 & 0 & \dots & 0 & 0 & 0 & 0 & 0 & 0 & 1 & 0 & 0 \\ 0 & \dots & 0 & 0 & 0 & \dots & 0 & 0 & 0 & 0 & 0 & 0 & 0 & 1 & 0 \\ 0 & \dots & 0 & 0 & 0 & \dots & 0 & 0 & 0 & 0 & 0 & 0 & 0 & 0 & 1 \end{array} \right) \quad \cdots (14)$$

Next, application of the second embodiment to dynamic picture editing will now be described.

For example, in editing a compressed picture of the so-called MPEG, an effect function to connect a subsequent cut in an overlapping manner while panning out a preceding cut is required for switching the cut. To realize such processing, processing to extract a part of the orthogonally transformed picture is required. However, by using the second embodiment, it becomes possible to extract and process an arbitrary portion without restoring the original picture and without having limitation set by the boundary of the block.

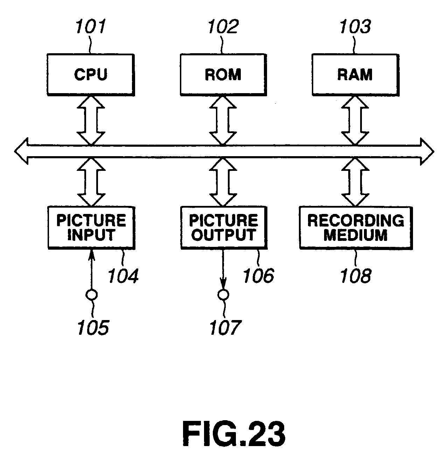

Fig.23 is a block diagram showing an example of the schematic structure of hardware for realizing the above-described processing, particularly in the case where a digital picture signal is handled In Fig.23, a ROM 102 on which programs and data are stored, a RAM as readable/writable storage means, a picture input interface 104, a picture output interface 106, and a recording medium 108 such as a hard disk are connected to a bus which is connected with a CPU (central processing unit) 101 for data computing and signal processing. A digital picture signal is inputted from a terminal 105 through the picture input interface 104, and a digital picture signal is outputted from the picture output interface 106 through a terminal 107.

A program used for processing of the embodiment of the present invention is recorded on the ROM 102 or the recording medium 108 such as a hard disk, and is provided therefrom. It can also be provided from a disk such as a CD-ROM or through a communication network.

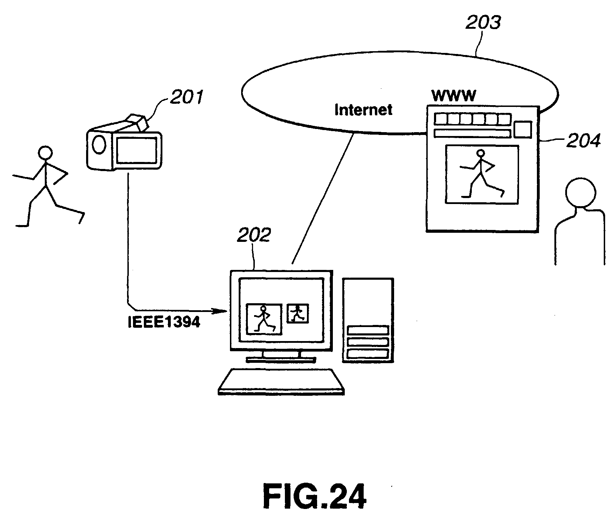

An example in which the above-described embodiment of the present invention is applied to a system for transform from the so-called DV standard to the MPEG1 standard will now be described with reference to Fig.24.

In the system shown in Fig.24, first, video information recorded by a home digital video camera 201 of the DV standard, in the form of digital signals, is directly taken into a personal computer 202 through an IEEE 1394 interface. In this case, the signals of the DV standard have a large data quantity and are not appropriate for handling in the personal computer 202. Thus, using the embodiment of the present invention, the video data of the DV standard is transformed to video data of the MPEG1 standard. By doing so, the data quantity is significantly reduced, making it possible to carry out non-linear editing through software in the personal computer 202 or provide the video data to another equipment 204 through the so-called Internet 203.

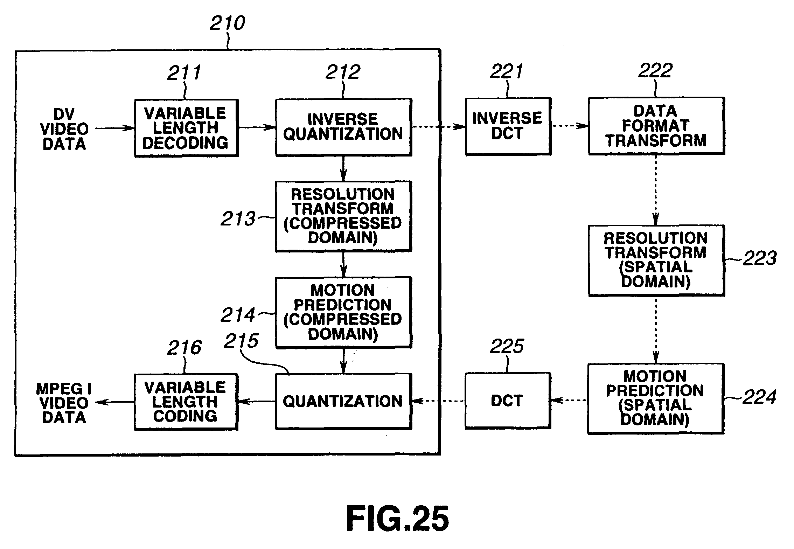

The format transform from the DV standard to the MPEG1 standard in the personal computer 202 is realized by a transform processing section 210 of Fig.25.

In Fig.25, the supplied DV video data is decoded by variable length decoding by a variable length decoding section 211 in the transform processing section 210, and then inversely quantized by an inverse quantization section 212. The video data is then sent to a resolution transform section 213 while it still is of the orthogonally transformed domain or the compressed domain, and resolution transform is carried out. The transform processing by the resolution transform section 213 is realized by the above-described embodiment. In addition, after motion prediction processing is carried out by a motion prediction section 214 while the video data still is of the orthogonally transformed domain or the compressed domain, the resultant data is sent to and quantized by a quantization section 215. The quantized video data is coded by variable length coding by a variable length coding section 216 and then taken out as video data of the MPEG1 standard.

Meanwhile, in accordance with the conventional format transform, after the signal inversely quantized by the inverse quantization section 212 is inversely orthogonally transformed to a signal of the time or spatial domain by an inverse DCT section 221, data format transform by a data format transforming section 222, resolution transform by a resolution transforming section 223 and motion prediction by a motion prediction section 224 are sequentially carried out. Then, after orthogonal transform is carried out by a DCT section 225 to transform the signal to a signal of the orthogonally transformed domain or the compressed domain, the resultant signal needs to be sent to the quantization section 215. Therefore, in the conventional method, since the processing steps for inversely orthogonally transforming a signal of the orthogonally transformed domain or the compressed domain to a signal of the time or spatial domain, then carrying out necessary signal processing, and carrying out orthogonal transform again are required, the overall processing is complicated and the processing speed is lowered. However, by using the embodiment of the present invention, the processing steps can be significantly reduced and high-speed processing through software can be realized.

According to the above-described second embodiment of the present invention, since the original signal need not be restored, high-speed processing can be carried out. Also, resolution transform with an arbitrary scale factor and transform of the block size of a signal to an arbitrary size can be realized as well as less deterioration in the signal caused by calculation errors. In addition, a part of the signal alone can be selectively processed by using the selection matrix, and in such case, the boundary between blocks of an input signal need not be considered. Also, the processing matrix can be determined without being affected by the orthogonal transform base of the signal. The matrix is simple in design and can be applied to various signal processing.

As is clear from the above description, according to the present invention, an inverse orthogonal transform matrix $Ts^{-1}$ for inverse orthogonal transform and an orthogonal transform matrix $Td$ for orthogonal transform are generated, and a transform matrix $D$ is generated by using the generated inverse orthogonal transform matrix $Ts^{-1}$ and

orthogonal transform matrix Td. Then, transform processing is carried out in an orthogonally transformed domain by using the transform matrix D with respect to an input digital signal of the orthogonally transformed domain, thus obtaining an output digital signal of the orthogonally transformed domain. Therefore, transform of the resolution and transform base can be carried out directly in the orthogonally transformed domain, and decoding (inverse orthogonal transform) to the time domain or the spatial domain becomes unnecessary. Thus, calculation is simplified to enable transform of high quality with less calculation errors, and hardware burden is reduced to realize sufficiently high-speed transform processing through software.

The input digital signal is a digital signal obtained by orthogonally transforming an original signal of the time domain or the spatial domain by using an orthogonal transform matrix Ts corresponding to the inverse orthogonal transform matrix $Ts^{-1}$, and the output digital signal is decoded by using an inverse orthogonal transform matrix $Td^{-1}$ corresponding to the orthogonal transform matrix Td so as to be transformed to a signal of the time domain or the spatial domain. Also, the original signal is orthogonally transformed by using an orthogonal transform matrix $Ts_{(k)}$ of a base length of k for each transform block having a length of k to generate the input digital signal, and continuous signals having a length of L (= k×m) consisting of adjacent m blocks of the input digital signal are transformed to one block having a length of N. The transform matrix D is generated by arranging m units of the orthogonal transform matrices $Ts_{(k)}$ on a diagonal axis to generate an L-order square matrix A, then taking out N units of low-frequency base vectors of an orthogonal transform matrix $Td_{(L)}$ having a base length of L to generate a matrix B consisting of N rows and L columns, and using an equation of

$$D = \alpha \cdot B \cdot A$$

where $\alpha$ is a coefficient for level correction of a scalar value or a vector value.

Thus, the input digital signal can be contracted to N/L in the orthogonally transformed domain. Particularly, where N = L, the transform matrix D becomes a matrix for transforming the transform base. If the orthogonal transform matrices Ts and Td differ from each other, transform is carried out by using the orthogonal transform system.

Also, by using an n-dimensional digital signal as the input digital signal and then carrying out transform processing in the orthogonally transformed domain using the transform matrix D for each dimension, an n-dimensional output digital signal can be obtained. In this case, if the transform scale factor varies from dimension to dimension, transform matrices are generated for the respective dimensions and used for carrying out transform processing with a scale factor varying from dimension to dimension. Thus, even in the case where the size or structure of the transform block differs depending on the components such as a luminance signal and a color-difference signal, resolution transform can be carried out while the corresponding relation between the components is maintained.

In addition, the transform block of the orthogonally transformed input digital signal is used as it is and transformed to a block having a length m times that of the original block by complementing the transform block with a predetermined value, to obtain the output digital signal of the orthogonally transformed domain. Thus, expansion processing of resolution can be carried out in the orthogonally transformed domain. By combining this expansion and the above-mentioned contraction, resolution transform can be carried out with arbitrary scale factor.

Moreover, a connection matrix for connecting at least one block having a predetermined number of samples of the input digital signal of an orthogonally transformed domain to form meta-blocks and for carrying out inverse orthogonal transform is generated, and a selection matrix for selecting and taking out a portion to be a processing target from the meta-blocks is generated. Then, a processing matrix for carrying out desired signal processing with respect to the selected portion is generated, and a division matrix having a function to carry out orthogonal transform on the processed signal and divide the signal into at least one block is generated. A transform matrix for carrying out transform processing with respect to the signal of the orthogonally transformed domain is generated by using the connection matrix, the selection matrix, the processing matrix and the division matrix. The transform matrix is applied to the orthogonally transformed input digital signal for each meta-block to obtain an output digital signal. Thus, since the original signal need not be restored, high-speed processing can be carried out. Also, resolution transform with an arbitrary scale factor and transform of the block size of a signal to an arbitrary size can be realized as well as less deterioration in the signal caused by calculation errors. In addition, a part of the signal alone can be selectively processed by using the selection matrix, and in such case, the boundary between blocks of an input signal need not be considered. Also, the processing matrix can be determined without being affected by the orthogonal transform base of the signal. The matrix is simple in design and can be applied to various signal processing.

The present invention is not limited to the above-described embodiments. For example, though resolution transform of an orthogonally transformed picture signal is mainly described in the embodiments, it is a matter of course that the present invention can also be applied to various digital signals of the frequency domain such as orthogonally transformed audio signals. The orthogonally transformed signal is not limited to the signal of the frequency domain, and a signal of the time domain or the spatial domain can be used as the original signal.

**Claims**

1. A digital signal transforming method comprising:

   a step of generating an inverse orthogonal transform matrix $Ts^{-1}$ for inverse orthogonal transform and an orthogonal transform matrix Td for orthogonal transform;
   a step of generating a transform matrix D by using the generated inverse orthogonal transform matrix $Ts^{-1}$ and orthogonal transform matrix Td; and
   a step of carrying out signal processing in an orthogonally transformed domain by using the transform matrix D with respect to an input digital signal of the orthogonally transformed domain, thus obtaining an output digital signal of the orthogonally transformed domain.

2. The digital signal transforming method as claimed in claim 1, wherein the input digital signal is a digital signal obtained by orthogonally transforming an original signal of the time domain by using an orthogonal transform matrix Ts corresponding to the inverse orthogonal transform matrix $Ts^{-1}$, and
   wherein the output digital signal is decoded by using an inverse orthogonal transform matrix $Td^{-1}$ corresponding to the orthogonal transform matrix Td so as to be transformed to a signal of the time domain.

3. The digital signal transforming method as claimed in claim 2, wherein the original signal is orthogonally transformed by using an orthogonal transform matrix $Ts_{(k)}$ of a base length of k for each transform block having a length of k to generate the input digital signal, and wherein continuous signals having a length of L (= k×m) consisting of adjacent m blocks of the input digital signal are transformed to one block having a length of N by using the transform matrix D.

4. The digital signal transforming method as claimed in claim 3, wherein an L-order square matrix A is generated by arranging m units of inverse orthogonal transform matrices $Ts_{(k)}^{-1}$ corresponding to the orthogonal transform matrix $Ts_{(k)}$ on a diagonal axis while a matrix B consisting of N rows and L columns is generated by taking out N units of low-frequency base vectors of an orthogonal transform matrix $Td_{(L)}$ having a base length of L, and the transform matrix D is generated by using an equation of

$$D = \alpha \cdot B \cdot A$$

   where $\alpha$ is a scalar value or a vector value.

5. The digital signal transforming method as claimed in claim 3, wherein the block length N is equal to the length L.

6. The digital signal transforming method as claimed in claim 1, wherein the input digital signal is an n-dimensional digital signal, and
   wherein signal processing is carried out in the orthogonally transformed domain by using the transform matrix D for each dimension to obtain an n-dimensional output digital signal.

7. The digital signal transforming method as claimed in claim 1, wherein the input digital signal is an n-dimensional digital signal, and
   wherein transform matrices for carrying out transform with a scale factor varying from dimension to dimension are generated,

   so that transform processing is carried out with a scale factor varying from dimension to dimension by using the transform matrices to obtain an n-dimensional output digital signal.

8. The digital signal transforming method as claimed in claim 1, wherein the transform block of the orthogonally transformed input digital signal is used as it is and transformed to a block having a length m times that of the original block by complementing the transform block with a predetermined value, to obtain an output digital signal of the frequency domain.

9. A digital signal transforming device comprising:

   orthogonal transform matrix generating means for generating an inverse orthogonal transform matrix $Ts^{-1}$ for inverse orthogonal transform and an orthogonal transform matrix Td for orthogonal transform;

transform matrix generating means for generating a transform matrix D by using the generated inverse orthogonal transform matrix $Ts^{-1}$ and orthogonal transform matrix Td; and

signal transforming means for carrying out signal processing in an orthogonally transformed domain by using the transform matrix D with respect to an input digital signal of the orthogonally transformed domain, thus obtaining an output digital signal of the orthogonally transformed domain.

10. The digital signal transforming device as claimed in claim 9, wherein the input digital signal is a digital signal obtained by orthogonally transforming an original signal of the time domain by using an orthogonal transform matrix Ts corresponding to the inverse orthogonal transform matrix $Ts^{-1}$, and

wherein the output digital signal is decoded by using an inverse orthogonal transform matrix $Td^{-1}$ corresponding to the orthogonal transform matrix Td so as to be transformed to a signal of the time domain.

11. The digital signal transforming device as claimed in claim 10, wherein the original signal is orthogonally transformed by using an orthogonal transform matrix $Ts_{(k)}$ of a base length of k for each transform block having a length of k to generate the input digital signal,

the signal transforming means transforming continuous signals having a length of $L (= k \times m)$ consisting of adjacent m blocks of the input digital signal to one block having a length of N by using the transform matrix D.

12. The digital signal transforming device as claimed in claim 11, wherein the transform matrix generating means generates an L-order square matrix A by arranging m units of inverse orthogonal transform matrices $Ts_{(k)}^{-1}$ corresponding to the orthogonal transform matrix $Ts_{(k)}$ on a diagonal axis, then generates a matrix B consisting of N rows and L columns by taking out N units of low-frequency base vectors of an orthogonal transform matrix $Td_{(L)}$ having a base length of L, and generates the transform matrix D by using an equation of

$$D = \alpha \cdot B \cdot A$$

where $\alpha$ is a scalar value or a vector value.

13. The digital signal transforming device as claimed in claim 11, wherein the block length N is equal to the length L.

14. The digital signal transforming device as claimed in claim 9, wherein an n-dimensional digital signal is inputted as the input digital signal,

the signal transforming means carrying out signal processing in the orthogonally transformed domain by using the transform matrix D for each dimension to obtain an n-dimensional output digital signal.

15. The digital signal transforming device as claimed in claim 9, wherein the input digital signal is an n-dimensional digital signal,

the transform matrix generating means generating transform matrices for carrying out transform with a scale factor varying from dimension to dimension,

the signal transforming means carrying out transform processing with a scale factor varying from dimension to dimension by using the transform matrices to obtain an n-dimensional output digital signal.

16. The digital signal transforming device as claimed in claim 9, wherein the signal transforming means uses the transform block of the orthogonally transformed input digital signal as it is and transforms the transform block to a block having a length m times that of the original block by complementing the transform block with a predetermined value, to obtain an output digital signal of the frequency domain.

17. A providing medium for providing processing information comprising:

a step of generating an inverse orthogonal transform matrix $Ts^{-1}$ for inverse orthogonal transform and an orthogonal transform matrix Td for orthogonal transform;
a step of generating a transform matrix D by using the generated inverse orthogonal transform matrix $Ts^{-1}$ and orthogonal transform matrix Td; and
a step of carrying out signal processing in an orthogonally transformed domain by using the transform matrix D with respect to an input digital signal of the orthogonally transformed domain, thus obtaining an output digital signal of the orthogonally transformed domain.

18. The providing medium as claimed in claim 17, wherein the input digital signal is a digital signal obtained by orthogonally transforming an original signal of the time domain by using an orthogonal transform matrix Ts corresponding to the inverse orthogonal transform matrix $Ts^{-1}$, and

wherein the output digital signal is decoded by using an inverse orthogonal transform matrix $Td^{-1}$ corresponding to the orthogonal transform matrix Td so as to be transformed to a signal of the time domain.

19. A transform matrix generating method comprising:

an input orthogonal transform matrix generating step of generating an inverse orthogonal transform matrix $Ts^{-1}$ corresponding to an orthogonal transform matrix Ts expressing orthogonal transform carried out on an input digital signal of the frequency domain;

an output orthogonal transform matrix generating step of generating an orthogonal transform matrix Td corresponding to an inverse orthogonal transform matrix $Td^{-1}$ expressing inverse orthogonal transform as decoding processing to be carried out on an output digital signal of the frequency domain; and

a transform matrix generating step of generating a transform matrix D on the basis of the inverse orthogonal transform matrix $Ts^{-1}$ and the orthogonal transform matrix Td.

20. A transform matrix generating device comprising:

input orthogonal transform matrix generating means for generating an inverse orthogonal transform matrix $Ts^{-1}$ corresponding to an orthogonal transform matrix Ts expressing orthogonal transform carried out on an input digital signal of the frequency domain;
output orthogonal transform matrix generating means for generating an orthogonal transform matrix Td corresponding to an inverse orthogonal transform matrix $Td^{-1}$ expressing inverse orthogonal transform as decoding processing to be carried out on an output digital signal of the frequency domain; and
transform matrix generating means for generating a transform matrix D on the basis of the inverse orthogonal transform matrix $Ts^{-1}$ and the orthogonal transform matrix Td.

21. A digital signal transforming method comprising:

a step of generating a connection matrix for connecting at least one block having a predetermined number of samples of an input digital signal of an orthogonally transformed domain to form meta-blocks and for carrying out inverse orthogonal transform;

a step of generating a selection matrix for selecting and taking out a portion to be a processing target from the meta-blocks;

a step of generating a processing matrix for carrying out desired signal processing with respect to the selected portion;

a step of generating a division matrix having a function to carry out orthogonal transform on the processed signal and divide the signal into at least one block;

a step of generating a transform matrix for carrying out transform processing with respect to the signal of the orthogonally transformed domain, by using the connection matrix, the selection matrix, the processing matrix and the division matrix; and

a step of applying the transform matrix to the orthogonally transformed input digital signal for each meta-block to obtain an output digital signal.

22. The digital signal transforming method as claimed in claim 21, wherein the input digital signal is a digital signal obtained by orthogonally transforming an original signal of the time domain by using an orthogonal transform matrix Ts,

the meta-block consisting of $m_I$ units of blocks having a length of $k_I$, connected to each other,

the connection matrix consisting of $m_I$ units of inverse orthogonal transform matrices $Ts^{-1}$ corresponding to the orthogonal transform matrix Ts, arranged on the diagonal.

23. The digital signal transforming method as claimed in claim 21, wherein the output digital signal is a signal decoded by using an inverse orthogonal transform matrix $Td^{-1}$ so as to be transformed to a signal of the time domain, and wherein an output digital signal obtained by transforming the input digital signal to one meta-block consists of $m_O$ units of blocks having a length of $k_O$, connected to each other,

the division matrix consisting of $m_O$ units of inverse orthogonal transform matrices $Td^{-1}$ corresponding to the orthogonal transform matrix Td, arranged on the diagonal.

24. A digital signal transforming device comprising:

connection matrix generating means for generating a connection matrix for connecting at least one block having a predetermined number of samples of an input digital signal of an orthogonally transformed domain to form meta-blocks and for carrying out inverse orthogonal transform;

selection matrix generating means for generating a selection matrix for selecting and taking out a portion to be a processing target from the meta-blocks;

processing matrix generating means for generating a processing matrix for carrying out desired signal processing with respect to the selected portion;

division matrix generating means for generating a division matrix having a function to carry out orthogonal transform on the processed signal and divide the signal into at least one block;

transform matrix generating means for generating a transform matrix for carrying out transform processing with respect to the signal of the orthogonally transformed domain, by using the connection matrix, the selection matrix, the processing matrix and the division matrix; and

signal transforming means for applying the transform matrix to the orthogonally transformed input digital signal for each meta-block to obtain an output digital signal.

25. The digital signal transforming device as claimed in claim 24, wherein the input digital signal is a digital signal obtained by orthogonally transforming an original signal of the time domain by using an orthogonal transform matrix Ts,

the meta-block consisting of $m_I$ units of blocks having a length of $k_I$, connected to each other,
the connection matrix consisting of $m_I$ units of inverse orthogonal transform matrices $Ts^{-1}$ corresponding to the orthogonal transform matrix Ts, arranged on the diagonal.

26. The digital signal transforming device as claimed in claim 24, wherein the output digital signal is a signal decoded by using an inverse orthogonal transform matrix $Td^{-1}$ so as to be transformed to a signal of the time domain, and wherein an output digital signal obtained by transforming the input digital signal to one meta-block consists of $m_O$ units of blocks having a length of $k_O$, connected to each other,

the division matrix consisting of $m_O$ units of inverse orthogonal transform matrices $Td^{-1}$ corresponding to the orthogonal transform matrix Td, arranged on the diagonal.

27. A providing medium for providing processing information comprising:

a step of generating a connection matrix for connecting at least one block having a predetermined number of samples of an input digital signal of an orthogonally transformed domain to form meta-blocks and for carrying out inverse orthogonal transform;
a step of generating a selection matrix for selecting and taking out a portion to be a processing target from the meta-blocks;

a step of generating a processing matrix for carrying out desired signal processing with respect to the selected portion;

a step of generating a division matrix having a function to carry out orthogonal transform on the processed signal and divide the signal into at least one block;

a step of generating a transform matrix for carrying out transform processing with respect to the signal of the orthogonally transformed domain, by using the connection matrix, the selection matrix, the processing matrix and the division matrix; and

a signal transforming step of applying the transform matrix to the orthogonally transformed input digital signal for each meta-block to obtain an output digital signal.

28. A transform matrix generating method comprising:

a step of generating a connection matrix for connecting at least one block having a predetermined number of samples of an input digital signal of an orthogonally transformed domain to form meta-blocks and for carrying out inverse orthogonal transform;

a step of generating a selection matrix for selecting and taking out a portion to be a processing target from the meta-blocks; a step of generating a processing matrix for carrying out desired signal

processing with respect to the selected portion;

a step of generating a division matrix having a function to carry out orthogonal transform on the processed signal and divide the signal into at least one block; and

a step of generating a transform matrix for carrying out transform processing with respect to the signal of the orthogonally transformed domain, by using the connection matrix, the selection matrix, the processing matrix and the division matrix.

29. A transform matrix generating device comprising:

connection matrix generating means for generating a connection matrix for connecting at least one block having a predetermined number of samples of an input digital signal of an orthogonally transformed domain to form meta-blocks and for carrying out inverse orthogonal transform;

selection matrix generating means for generating a selection matrix for selecting and taking out a portion to be a processing target from the meta-blocks;

processing matrix generating means for generating a processing matrix for carrying out desired signal processing with respect to the selected portion;

division matrix generating means for generating a division matrix having a function to carry out orthogonal transform on the processed signal and divide the signal into at least one block; and

transform matrix generating means for generating a transform matrix for carrying out transform processing with respect to the signal of the orthogonally transformed domain, by using the connection matrix, the selection matrix, the processing matrix and the division matrix.

30. A digital signal transforming method for carrying out predetermined transform processing on a digital signal, the method comprising:

a step of inputting a digital signal of an orthogonally transformed domain;

a step of carrying out arithmetic processing on the inputted digital signal in the orthogonally transformed domain by using a transform matrix D; and

a step of outputting the digital signal as a result of the arithmetic processing;

the transform matrix D being a matrix generated by using an inverse orthogonal transform matrix $Ts^{-1}$ for

inverse orthogonal transform and an orthogonal transform matrix Td for orthogonal transform.

31. A digital signal transforming device for carrying out predetermined transform processing on a digital signal, the device comprising:

input means for inputting a digital signal of an orthogonally transformed domain;

operation means for carrying out arithmetic processing on the inputted digital signal in the orthogonally transformed domain by using a transform matrix D; and

output means for outputting the digital signal as a result of the arithmetic processing;

the transform matrix D being a matrix generated by using an inverse orthogonal transform matrix $Ts^{-1}$ for inverse orthogonal transform and an orthogonal transform matrix Td for orthogonal transform.

32. A providing medium for providing a processing instruction for carrying out predetermined transform processing on a digital signal, the providing medium comprising:

a processing instruction for inputting a digital signal of an orthogonally transformed domain;
a processing instruction for carrying out arithmetic processing on the inputted digital signal in the orthogonally transformed domain by using a transform matrix D; and
a processing instruction for outputting the digital signal as a result of the arithmetic processing;
the transform matrix D being a matrix generated by using an inverse orthogonal transform matrix $Ts^{-1}$ for inverse orthogonal transform and an orthogonal transform matrix Td for orthogonal transform.

33. A digital signal transforming method for carrying out predetermined transform processing on a digital signal, the method comprising:

a step of inputting a digital signal of an orthogonally transformed domain by each block consisting of a predetermined number of samples as a unit;

a step of carrying out arithmetic processing on the inputted digital signal by each meta-block consisting of at least one block, in the orthogonally transformed domain by using a transform matrix; and

a step of outputting the digital signal as a result of the arithmetic processing;

the transform matrix being a matrix generated by using:

a connection matrix for connecting at least one block to form a meta-block and carrying out inverse orthogonal transform;

a selection matrix for selecting and taking out a portion to be a processing target from the meta-block;

a processing matrix for carrying out desired signal processing with respect to the selected portion; and

a division matrix for carrying out orthogonal transform on the processed signal and dividing the signal into at least one block.

34. A digital signal transforming device for carrying out predetermined transform processing on a digital signal, the device comprising:

input means for inputting a digital signal of an orthogonally transformed domain by each block consisting of a predetermined number of samples as a unit;

operation means for carrying out arithmetic processing on the inputted digital signal by each meta-block consisting of at least one block, in the orthogonally transformed domain by using a transform matrix; and

output means for outputting the digital signal as a result of the arithmetic processing;

the transform matrix being a matrix generated by using:

a connection matrix for connecting at least one block to form a meta-block and carrying out inverse orthogonal transform;

a selection matrix for selecting and taking out a portion to be a processing target from the meta-block;

a processing matrix for carrying out desired signal processing with respect to the selected portion; and

a division matrix for carrying out orthogonal transform on the processed signal and dividing the signal into at least one block.

35. A providing medium for providing a processing instruction for carrying out predetermined transform processing on a digital signal, the providing medium comprising:

a processing instruction for inputting a digital signal of an orthogonally transformed domain by each block consisting of a predetermined number of samples as a unit;

a processing instruction for carrying out arithmetic processing on the inputted digital signal by each meta-block consisting of at least one block, in the orthogonally transformed domain by using a transform matrix; and

a processing instruction for outputting the digital signal as a result of the arithmetic processing;

the transform matrix being a matrix generated by using:

a connection matrix for connecting at least one block to form a meta-block and carrying out inverse orthogonal transform;

a selection matrix for selecting and taking out a portion to be a processing target from the meta-block;

a processing matrix for carrying out desired signal processing with respect to the selected portion; and

a division matrix for carrying out orthogonal transform on the processed signal and dividing the signal into at least one block.

*11*

**INPUT ORTHOGONAL TRANSFORM MATRIX GENERATING SECTION**

*12*

**OUTPUT ORTHOGONAL TRANSFORM MATRIX GENERATING SECTION**

$Ts_{(K)}^{-1}$

$Td_{(L)}$

**TRANSFORM MATRIX GENERATING SECTION** ~*13*

D

*15*

**INPUT DIGITAL SIGNAL**

*14*

**SIGNAL TRANSFORMING SECTION**

*16*

**OUTPUT DIGITAL SIGNAL**

**FREQUENCY DOMAIN**

# FIG.1

**FIG.2**

ORIGINAL SIGNAL — 21

22 — 1/4 CONTRACTION

TIME DOMAIN

$Ts_{(8)}$  $Ts_{(8)}^{-1}$  $Ts_{(16)}$  $Td_{(8)}^{-1}$

24

8
8
16
16
T
8
8
D
25
23
FREQUENCY DOMAIN

## FIG.3

FIG.4

EP 0 932 106 A1

**FIG.5**

START GENERATING RESOLUTION
TRANSFORM MATRIX

$k$ = LENGTH OF BASE USED
FOR INPUT SIGNAL — S31

$m$ = CONTRACTION RATE — S32

$L = k \times m$ — S33

GENERATE $T_{(k)}^{-1}$ — S34

$$A = \begin{pmatrix} T_{(k)}^{-1} & & 0 \\ & \cdot & \\ & & \cdot \\ 0 & & T_{(k)}^{-1} \end{pmatrix}$$ — S35

GENERATE $T_{(L)}$ — S36

EXTRACT $k$ COLUMNS OF
$B = T_{(L)}$ — S37

$D = \alpha BA$ — S38

RESOLUTION TRANSFORM
MATRIX COMPLETED

# FIG.6

EP 0 932 106 A1

START RESOLUTION
TRANSFORM

S41

TRANSFORMED
IN ALL DIMENSIONS
?

YES → END RESOLUTION
TRANSFORM

NO

SET NEXT DIMENSION
TO CURRENT DIMENSION — S42

S43

SIZE
OF INPUT SIGNAL
$\neq$ MULTIPLE OF L
?

YES → SUPPLEMENT TO MAKE
MULTIPLE OF L — S44

NO

DIVIDE INTO META-BLOCKS
WITH LENGTH L — S45

S46

ALL
META-BLOCKS
TRANSFORMED
?

YES

NO

SET NEXT META-BLOCK
TO CURRENT META-BLOCK
VECTOR M — S47

C = DM — S48

OUTPUT C — S49

FIG.7

30

A  (ORIGINAL
    SIGNAL)

TIME DOMAIN

Ts  ORTHOGONAL
    TRANSFORM

B₁  (FREQUENCY
    SIGNAL)

EXPANSION BY
MULTIPLE m

B₂

FULL WITH 0

FREQUENCY
DOMAIN

# FIG.8

**FIG.9**

START GENERATING RESOLUTION
TRANSFORM MATRIX

S61

GENERATED
IN ALL DIMENSIONS
?

YES

RESOLUTION TRANSFORM
MATRIX COMPLETED

NO

SET NEW DIMENSION
TO CURRENT DIMENSION (j) — S62

k = LENGTH OF BASE OF
CURRENT DIMENSION — S63

mj = CONTRACTION RATE OF
CURRENT DIMENSION — S64

$L_j = k \times m_j$ — S65

GENERATE $T_{(k)}^{-1}$ — S66

$$A = \begin{pmatrix} T_{(k)}^{-1} & & 0 \\ & \ddots & \\ 0 & & T_{(k)}^{-1} \end{pmatrix}$$ — S67

GENERATE $T_{(L_j)}$ — S68

EXTRACT k COLUMNS OF
$B = T_{(L_j)}$ — S69

$D_j = \alpha_j BA$ — S70

# FIG.10

START RESOLUTION
TRANSFORM

*S81*

TRANSFORMED
IN ALL DIMENSIONS
?

YES → END RESOLUTION
TRANSFORM

NO

SET NEW DIMENSION TO
CURRENT DIMENSION (j) — *S82*

*S83*

LENGTH
OF INPUT SIGNAL
IN CURRENT DIMENSION
≠ MULTIPLE OF L
?

YES → *S84*

SUPPLEMENT TO MAKE
MULTIPLE OF $L_j$

NO

DIVIDE INTO META-BLOCKS
WITH LENGTH $L_j$ — *S85*

*S86*

ALL
META-BLOCKS
OF CURRENT DIMENSION
TRANSFORMED
?

YES

NO

SET NEXT META-BLOCK
TO CURRENT META-BLOCK
VECTOR M — *S87*

$C = D_j M$ — *S88*

OUTPUT C — *S89*

# FIG.11

*111*      *117*      *118*      *112*

| CONNECTION MATRIX GENERATING SECTION | SELECTION MATRIX GENERATING SECTION | PROCESSING MATRIX GENERATING SECTION | DIVISION MATRIX GENERATING SECTION |

A         W         X         B

TRANSFORM MATRIX GENERATING SECTION *—113*

D

| INPUT DIGITAL SIGNAL | ⇒ | SIGNAL TRANSFORMING SECTION | ⇒ | OUTPUT DIGITAL SIGNAL |

*115*        *114*        *116*

# FIG.12

**FIG.13A** INPUT SIGNAL

$$L = m_I \times k_I$$

$$K_I$$

**FIG.13B** OUTPUT SIGNAL

$$N = m_O \times k_O$$

$$K_O$$

FIG.14A

$$L = m_I \times k_I$$

$$K_I$$

A

FIG.14B

p

W

q

M

FIG.14C

X

FIG.14D

B

FIG.14E

$$K_O$$

$$N = m_O \times k_O$$

INPUT SIGNAL

META-BLOCK $M_0$

META-BLOCK $M_1$

META-BLOCK $M_2$

META-BLOCK $M_3$

OUTPUT SIGNAL

# FIG.15

$$\text{START GENERATING CONNECTION MATRIX}$$

INITIALIZE PARAMETER — S121

GENERATE $Ts_{(k)}^{-1}$ — S122

GENERATE MATRIX A' OF L ROWS AND L COLUMNS — S123

INITIALIZE ELEMENT OF A' TO 0 — S124

ARRANGE $m_l$ UNITS OF $Ts_{(k)}^{-1}$ ON DIAGONAL OF A' — S125

GENERATION OF CONNECTION MATRIX COMPLETED

# FIG.16

START INITIALIZING
PARAMETER

k = BLOCK LENGTH OF
INPUT/OUTPUT SIGNAL — S161

a = NUMERATOR OF
SCALE FACTOR — S162

b = DENOMINATOR OF
SCALE FACTOR — S163

$L = b \times k$ — S164

$N = a \times k$ — S165

INITIALIZATION OF
PARAMETER COMPLETED

# FIG.17

START GENERATING
SELECTION MATRIX

INITIALIZE
PARAMETER — S131

GENERATE UNIT MATRIX I OF
L ROWS AND L COLUMNS — S132

W = I — S133

GENERATION OF SELECTION
MATRIX COMPLETED

# FIG.18

START GENERATING
PROCESSING MATRIX

INITIALIZE
PARAMETER — S141

FIND INVERSE COSINE
TRANSFORM MATRIX IDCT OF — S142
N ROWS AND N COLUMNS

FIND COSINE
TRANSFORM MATRIX DCT OF — S143
L ROWS AND L COLUMNS

GENERATE MATRIX OF
N ROWS AND L COLUMNS

$$Y = \begin{pmatrix} 1\,0\ldots0 & 0\ldots0 \\ 0\,1\ldots0 & 0\ldots0 \\ \ldots & \ldots \\ 0\,0\ldots1 & 0\ldots0 \end{pmatrix}$$ — S144

$\alpha = a\,/\,b$ — S145

$X = \alpha \cdot IDCT \cdot Y \cdot DCT$ — S146

GENERATION OF PROCESSING
MATRIX COMPLETED

# FIG.19

START GENERATING
DIVISION MATRIX

INITIALIZE
PARAMETER — S151

GENERATE $Td_{(k)}^{-1}$ — S152

GENERATE MATRIX B' OF
N ROWS AND N COLUMNS — S153

INITIALIZE ELEMENT OF B'
TO 0 — S154

ARRANGE $m_0$ UNITS OF $Td_{(k)}^{-1}$
ON DIAGONAL OF B' — S155

GENERATION OF DIVISION
MATRIX COMPLETED

# FIG.20

FIG.21

EP 0 932 106 A1

FIG.22A

FIG.22B

FIG.22C

101　　　　　102　　　　　103

| CPU | ROM | RAM |

| PICTURE INPUT | PICTURE OUTPUT | RECORDING MEDIUM |

104　　　　　106　　　　　108

105　　　　　107

# FIG.23

**FIG.24**

**FIG.25**

## INTERNATIONAL SEARCH REPORT

| | International application No. |
|---|---|
| | PCT/JP98/02653 |

**A. CLASSIFICATION OF SUBJECT MATTER**
Int.Cl⁶ G06F17/14, H03M7/30, H04N7/30

According to International Patent Classification (IPC) or to both national classification and IPC

**B. FIELDS SEARCHED**

Minimum documentation searched (classification system followed by classification symbols)
Int.Cl⁶ G06F17/14, H03M7/30, H04N7/30

Documentation searched other than minimum documentation to the extent that such documents are included in the fields searched
| Jitsuyo Shinan Koho | 1926-1996 | Toroku Jitsuyo Shinan Koho | 1994-1998 |
| Jitsuyo Shinan Kokai Koho | 1971-1998 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 5-316357, A (Nippon Telegraph & Telephone Corp.), 26 November, 1993 (26. 11. 93) (Family: none) | 1-18, 20-27, 29 |
| A | JP, 8-98173, A (Hitachi, Ltd.), 12 April, 1996 (12. 04. 96) (Family: none) | 1-18, 20-27, 29 |
| A | JP, 4-47860, A (Nippon Telegraph & Telephone Corp.), 18 February, 1992 (18. 02. 92) (Family: none) | 1-18, 20-27, 29 |
| A | JP, 4-229382, A (Ricoh Co., Ltd.), 18 August, 1992 (18. 08. 92) (Family: none) | 1-18, 20-27, 29 |

☐ Further documents are listed in the continuation of Box C.    ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 3 September, 1998 (03. 09. 98) | 16 September, 1998 (16. 09. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)